# EUROPÄISCHE PATENTSCHRIFT

(11) **EP 3 304 673 B1**
(45) Veröffentlichungstag und Bekanntmachung des Hinweises auf die Patenterteilung: **11.01.2023**
(21) Anmeldenummer: 16726302.9
(22) Anmeldetag: 27.05.2016
(51) Int. Cl.: H02J 1/00, H02J 7/34, B60R 16/03

(54) **ELEKTRISCHE VERSORGUNGSEINRICHTUNG UND DAMIT AUSGESTATTETES BORDNETZ EINES FAHRZEUGS**
ELECTRIC SUPPLY DEVICE AND VEHICLE ELECTRICAL SYSTEM EQUIPPED WITH THE ELECTRIC SUPPLY DEVICE
DISPOSITIF D'ALIMENTATION ÉLECTRIQUE ET RÉSEAU DE BORD DE VÉHICULE ÉQUIPÉ DE CE DISPOSITIF

(30) Priorität: 27.05.2015 DE 102015108372
(43) Veröffentlichungstag der Anmeldung: 11.04.2018
(73) Patentinhaber: Lisa Dräxlmaier GmbH, 84137 Vilsbiburg (DE)
(72) Erfinder: BACHMEIER, Anton, 84032 Kumhausen (DE); GAUBATZ, Karl-Heinz, 85599 Parsdorf (DE); PREIS, Christian, 84095 Furth (DE); LICHTENBERG, Erwin, 84137 Vilsbiburg (DE)
(86) Internationale Anmeldenummer: PCT/EP2016/062009
(87) Internationale Veröffentlichungsnummer: WO 2016/189135

(56) Entgegenhaltungen:
- DE-A1- 10 023 088
- DE-A1- 19 944 833
- US-A1- 2012 212 882

## Beschreibung

### Technisches Gebiet

Die vorliegende Erfindung betrifft eine elektrische Versorgungseinrichtung für ein Bordnetz eines Fahrzeugs, insbesondere eines Kraft-, Nutz-, Hybrid- oder Elektrofahrzeugs. Ferner betrifft die Erfindung ein Bordnetz eines Fahrzeugs mit einer solchen elektrischen Versorgungseinrichtung.

### Stand der Technik

Aus der Praxis sind Bordnetze von Fahrzeugen, insbesondere Energie-Bordnetze, bekannt, die unter anderem dazu dienen, eine Vielzahl von elektrischen Verbrauchern beziehungsweise Lasten mit elektrischer Energie zu versorgen. Je nach Fahrzeugart sind diese Bordnetze häufig als Zwei-, Dreispannungs-Bordnetze beziehungsweise allgemein als Mehrspannungs-Bordnetze ausgebildet, in denen elektrische Verbraucher mit zueinander unterschiedlicher elektrischer Leistungsaufnahme mit elektrischer Energie zu versorgen sind. Dementsprechend kann ein solches Mehrspannungs-Bordnetz zum Beispiel in Teil-Bordnetze unterteilt werden, die zueinander jeweils unterschiedliche elektrische Soll-Spannungswerte aufweisen. So ist es in einem Fahrzeug heute möglich, dass ein Mehrspannungs-Bordnetz in verschiedenen Teil-Bordnetzen gleichzeitig mit beispielsweise etwa 12V, 48V und im Hochvoltbereich mit etwa 60V und mehr elektrische Spannung betrieben wird.

Dabei wird das Bordnetz meist von einer elektrischen Energiequelle, wie etwa einem Generator oder einer Fahrzeug-Batterie beziehungsweise einem Sekundärelement, mit nur einem einzigen Soll-Spannungswert der oben genannten unterschiedlichen Soll-Spannungswerte gespeist. Dieser einzuspeisende Soll-Spannungswert kann beispielsweise im Hochvoltbereich mindestens etwa 60V oder mehr betragen. Um aber auch die weiteren Soll-Spannungswerte für das Bordnetz zur Verfügung zu stellen, weist ein Fahrzeug beziehungsweise ein Bordnetz desselben einen (einzigen) üblicherweise zentral angeordneten Gleichspannungswandler auf, der die weiteren Soll-Spannungswerte von etwa 12V und/oder 48V zur Verfügung stellt. Nachteilig an dieser Konfiguration ist, dass der Gleichspannungswandler für die je nach technischer Ausstattungsvariante maximal benötigte elektrische Leistungsaufnahme des mit dem Gleichspannungswandler versehenen Fahrzeugtyps ausgelegt werden muss. In anderen Worten muss der Gleichspannungswandler leistungsmäßig so ausgelegt sein, dass er auch in einer maximal möglichen Ausstattungsvariante ausreichend elektrische Energie zur Verfügung stellt. Infolgedessen ist der zentral angeordnete Gleichspannungswandler für einen signifikanten Anteil unter den Ausstattungsvarianten leistungsmäßig überdimensioniert. Zudem muss ein technischer Ausfall des Gleichspannungswandlers bei der Konfiguration des Bordnetzes, also bereits bei der Bordnetz-Architektur mit berücksichtigt werden.

Des Weiteren ist aus der Praxis bekannt, dass in einem Fahrzeug ein oder mehrere so genannte elektrische Stromverteiler angeordnet sind, die insbesondere dem Schalten elektrischer Lasten, gegebenenfalls der Absicherung gegen elektrische Fehlfunktionen und dem Verteilen der elektrischen Energie an die damit elektrisch leitfähig verbundene Vielzahl von elektrischen Verbrauchern des Bordnetzes dienen. Diese elektrischen Stromverteiler sind häufig in Form von Sicherungsträgern oder -kästen, Relaiskästen oder dergleichen ausgebildet und je nach Fahrzeugtyp über mehrere Einbauorte innerhalb des Fahrzeugs verteilt angeordnet beziehungsweise verbaut. Dabei werden die elektrischen Stromverteiler entweder direkt von der elektrischen Energiequelle des Fahrzeugs oder von dem zentral angeordneten Gleichspannungswandler mit elektrischer Energie mit einem bestimmten Soll-Spannungswert gespeist. Obwohl diese Konfiguration von elektrischen Stromverteilern eine zuverlässige Versorgung und gegebenenfalls Absicherung der elektrischen Verbraucher gewährleistet, hat es sich gezeigt, dass der Konstruktions- und Montageaufwand vergleichsweise hoch sind. Zudem ist es bei einer Mehrzahl von elektrischen Stromverteilern notwendig, diese jeweils mit einer elektrischen Leitung oder einem elektrischen Leitungssatz anzubinden, wodurch ein vergleichsweise hoher Konstruktions- und Montageaufwand entsteht. Als nachteilig hat sich in diesem Zusammenhang auch das vergleichsweise hohe (Eigen-) Gewicht der elektrischen Stromverteiler mit deren Gehäusen und der Vielzahl von elektrischen Leitungen erwiesen.

Im Stand der Technik finden sich bereits verbesserte Stromverteiler und Konzepte, wie diese in ein Kraftfahrzeug-Bordnetz integriert werden können. Die deutsche Offenlegungsschrift DE 199 44 833 A1 beschreibt ein Mehrspannungsbordnetz. Das Mehrspannungsbordnetz weist zwei von Masse verschiedene Spannungen von beispielsweise 14 und 42 V auf, bei dem ein Generator eine der Spannungen erzeugt und die andere Spannung mittels eines Gleichspannungswandlers aus der ersten Spannung gebildet wird. Die beiden Spannungen dienen zur Versorgung zweier getrennter Gleichspannungsnetze. Als Kurzschlussschutz zwischen den beiden Spannungsebenen sind Mittel vorhanden, die einen Kurzschluss weitgehend verringern und/oder Auswirkungen eines Kurzschlusses zwischen den beiden Spannungen vermindern. Weiterhin offenbart die deutsche Offenlegungsschrift DE 100 23 088 A1 einen Kraftfahrzeug-Verteilerkasten, der von einer Energiequelle gelieferte elektrische Energie auf eine mit einer ersten Spannung betriebene erste Last und auf eine mit einer zweiten, von der ersten Spannung verschiedenen Spannung betriebene zweite Last verteilt. Der Verteilerkasten weist eine Primärschaltung auf, deren Eingangsstelle an die Energiequelle und deren Ausgangsstelle an die erste Last angeschlossen ist. Die Primärschaltung weist ferner eine erste Sicherung auf. Der Verteilerkasten weist eine Abzweigschaltung auf, die an einer der ersten Sicherung vorgeschalteten Stelle von der Primärschaltung abzweigt und an einer Ausgangsstelle an die zweite Last angeschlossen ist. In der AbzweigSchaltung ist ein DC/DC-Wandler vorgesehen, der die erste Spannung in die zweite Spannung umwandelt, sowie eine zweite Sicherung, die dem DC/DC-Wandler nachgeschaltet ist. Die erste Spannung ist höher als die zweite Spannung. Es lassen sich auch ein Haupt-Verteilerkasten und ein Neben-Verteilerkasten vorsehen, Wobei eine Eingangsseite des Neben-Verteilerkastens mit einer Ausgangsseite des Haupt-Verteilerkastens gekoppelt ist.

### Beschreibung der Erfindung

Die Aufgabe der Erfindung ist es daher, eine alternative und konstruktiv möglichst einfache und/oder vergleichsweise funktionssichere Möglichkeit zur Versorgung eines Bordnetzes eines Fahrzeugs mit elektrischer Energie zu schaffen.

Diese Aufgabe wird durch die Gegenstände mit den Merkmalen der unabhängigen Ansprüche gelöst. Vorteilhafte Weiterbildungen der Erfindung sind in den Unteransprüchen, der nachfolgenden Beschreibung sowie den Figuren angegeben.

Eine erfindungsgemäße elektrische Versorgungseinrichtung für ein Bordnetz eines Fahrzeugs weist wenigstens einen elektrischen Stromverteiler auf, der dazu eingerichtet ist, eine Vielzahl von elektrischen Verbrauchern beziehungsweise Lasten mit elektrischer Energie zu versorgen. Zudem weist die elektrische Versorgungseinrichtung wenigstens einen Gleichspannungswandler (auch als DC-DC-Wandler bezeichnet), der dazu eingerichtet ist, den wenigstens einen elektrischen Stromverteiler mit elektrischer Energie zu speisen. Erfindungsgemäß sind der wenigstens eine elektrische Stromverteiler und der wenigstens eine Gleichspannungswandler zu zumindest einer einzigen Baueinheit räumlich zusammengefasst.

In anderen Worten sind der Gleichspannungswandler und der eine oder die mehreren elektrischen Stromverteiler innerhalb des Fahrzeugs räumlich nicht getrennt voneinander, sondern räumlich in unmittelbarer Nachbarschaft zueinander angeordnet, nämlich in Form von einer einzigen, integralen Baueinheit. Dabei kann die Baueinheit dazu eingerichtet sein, datentechnische Informationen und/oder Steuersignale, die beispielsweise von Steuergeräten des Fahrzeugs zur Verfügung gestellt werden, sowohl an den Gleichspannungswandler als auch an den elektrischen Stromverteiler zu übermitteln, wobei die Übermittlung an die Baueinheit über ein gemeinsame Datenleitung oder dergleichen erfolgen kann. Zudem kann die Baueinheit mit einer oder mehreren elektrischen Energiequellen sowie einem oder mehreren elektrischen Energiespeichern elektrisch leitfähig verbunden sein. Hierfür kann beispielsweise ein entsprechend eingerichteter elektrischer Stromverteiler der Baueinheit mit einer Hochvolt-Batterie (kurz HV-Batterie), ein entsprechend eingerichteter elektrischer Stromverteiler mit einer 12V-Batterie und/oder ein entsprechend eingerichteter elektrischer Stromverteiler mit einer 48V-Batterie elektrisch leitfähig verbunden sein. Mit dem wenigstens einen elektrischen Stromverteiler der Baueinheit können jeweils eine Vielzahl von elektrischen Verbrauchern elektrisch leitfähig verbunden sein, etwa elektrische Maschinen, Stellglieder, Audio-Komponenten, elektrische Heizungen oder dergleichen. Das heißt, dass die zu versorgenden, elektrischen Verbraucher direkt beziehungsweise unmittelbar an der Baueinheit angeschlossen sein können.

Diese erfindungsgemäße Konfiguration ermöglicht es vorteilhafterweise, dass der Gleichspannungswandler und der elektrische Verteiler gemeinsam, das heißt nicht getrennt voneinander in einem gemeinsamen Arbeitsschritt montiert beziehungsweise im Fahrzeug verbaut werden können. Es können auch einzelne elektrische oder elektronische Bauelemente und/oder Baugruppen des Gleichspannungswandlers oder des elektrischen Stromverteilers für die zusammengefasste Baueinheit gemeinsam genutzt werden, wodurch beispielsweise Platinen eingespart werden können. Zudem können elektrische Leitungen beziehungsweise elektrische Leitungssätze, also insbesondere deren (Eigen-)Gewicht eingespart werden, da der Gleichspannungswandler und der elektrische Stromverteiler ausschließlich innerhalb der gemeinsamen, zusammengefassten Baueinheit elektrisch leitfähig miteinander verbunden sein können. Es ist durch ein Vorsehen von entsprechenden konfigurierten elektronischer Bauelemente oder Baugruppen und/oder von entsprechend konfigurierter Software technisch auch vergleichsweise einfach möglich, die Baueinheit zu einem System zur intelligenten Energieverteilung auszubilden.

Eine besonders vorteilhafte Weiterbildung der Erfindung sieht vor, dass der wenigstens eine elektrische Stromverteiler und der wenigstens eine Gleichspannungswandler in einem gemeinsamen, das heißt einem einzigen Gehäuse zusammengefasst sind. Auf diese Weise kann ein zusätzliches Gehäuse für eine der beiden Baugruppen eingespart werden, wodurch innerhalb des Fahrzeugs Bauraum eingespart werden kann.

Für ein noch höheres Einsparpotential hinsichtlich des benötigten Bauraums und/oder des Gewichts der elektrischen Leitungen, kann die Baueinheit eine Mehrzahl, also zwei, drei oder mehr von den elektrischen Stromverteilern aufweisen, die zumindest teilweise mit zueinander unterschiedlichen, elektrischen Soll-Spannungswerten gespeist sind. Diese elektrischen Stromverteiler können beispielsweise innerhalb eines gemeinsamen Gehäuses untergebracht sein. Zum Beispiel können in der gemeinsamen Baueinheit ein oder mehrere elektrische Stromverteiler vorgesehen sein, die für die Speisung eines Soll-Spannungswerts von etwa 12V eingerichtet sind. Zusätzlich oder alternativ dazu können ein oder mehrere Stromverteiler vorgesehen sein, die für die Speisung eines Soll-Spannungswerts von etwa 48V eingerichtet sind. Zusätzlich oder alternativ dazu können ein oder mehrere Stromverteiler vorgesehen sein, die für die Speisung eines Soll-Spannungswerts im Hochspannungsbereich von mindestens 60V oder mehr eingerichtet sind.

Eine weitere, vorteilhafte Ausführungsvariante der Erfindung sieht vor, dass der eingespeiste elektrische Soll-Spannungswert des wenigstens einen elektrischen Stromverteilers entweder etwa 12V, etwa 48V, oder im Hochvoltbereich mindestens etwa 60V oder mehr beträgt. Dabei können für jeden der vorstehenden Soll-Spannungswerte ein einziger oder mehrere elektrische Stromverteiler vorgesehen sein.

Für eine Versorgung von elektrischen Verbrauchern mit elektrischer Energie im so genannten Niedervoltbereich hat es sich als vorteilhaft erwiesen, wenn die Baueinheit wenigstens einen ersten elektrischen Stromverteiler aufweist, der zur Speisung mit etwa 12V Soll-Spannungswert eingerichtet ist. Es können dabei ein einziger oder mehrere erste elektrische Stromverteiler vorgesehen sein. Ein solcher erster elektrischer Stromverteiler kann eingesetzt werden, wenn die damit zu versorgenden elektrischen Verbraucher eine vergleichsweise geringe elektrische Leistungsaufnahme haben.

Alternativ oder zusätzlich dazu kann die Baueinheit wenigstens einen zweiten elektrischen Stromverteiler aufweisen, der zur Speisung im Hochvoltbereich mit mindestens etwa 60V oder mehr Soll-Spannungswert eingerichtet ist. Es können dabei ein einziger oder mehrere zweite elektrische Stromverteiler vorgesehen sein. Ein solcher zweiter elektrischer Stromverteiler kann eingesetzt werden, wenn die damit zu versorgenden elektrischen Verbraucher eine vergleichsweise hohe elektrische Leistungsaufnahme haben. Ein Einsatzbereich sind beispielsweise die elektrischen Antriebsmaschinen eines Hybrid- oder Elektrofahrzeugs.

Alternativ oder zusätzlich dazu kann die Baueinheit wenigstens einen dritten elektrischen Stromverteiler aufweisen, der zur Speisung mit etwa 48V Soll-Spannungswert eingerichtet ist. Es können dabei ein einziger oder mehrere dritte elektrische Stromverteiler vorgesehen sein. Ein solcher dritter elektrischer Stromverteiler kann eingesetzt werden, wenn die damit zu versorgenden elektrischen Verbraucher eine vergleichsweise hohe elektrische Leistungsaufnahme haben.

Für einen möglichst vielseitigen Einsatz hat es sich als vorteilhaft erwiesen, wenn die Baueinheit, insbesondere der wenigstens eine Gleichspannungswandler und/oder der wenigstens eine elektrische Stromverteiler skalierbar, das heißt an die benötigte Leistung und/oder die Leistungsaufnahme anpassbar ausgeführt sind. Insbesondere kann die Baueinheit also modular aufgebaut sein. Auf diese Weise kann eine vergleichsweise einfache Anpassung an die jeweiligen Anforderungen für einen jeweiligen Fahrzeugtyp, an Kundenwünsche und dergleichen erfolgen.

Für einen modularen Aufbau der Baueinheit kann es zweckmäßig sein, wenn die physikalischen Schnittstellen sowie gegebenenfalls vorhandene Kommunikationsschnittstellen, insbesondere die des Gleichspannungswandlers, standardisierte Schnittstellen sind.

Um auch mehrere Soll-Spannungswerte mit einer einzigen Baueinheit bereitstellen zu können, ist es vorteilhaft, wenn der wenigstens eine Gleichspannungswandler dazu eingerichtet ist, einen eingehende (Soll-)Spannungswert im Hochvoltbereich von mindestens etwa 60V oder mehr in einen ausgehenden Soll-Spannungswert von etwa 12V und/oder von etwa 48V umzuwandeln. Demnach können ein Eingang des Gleichspannungswandlers mit einer Hochvolt-Energiequelle und ein oder mehrere Ausgänge mit einem oder mehreren elektrischen Stromverteilern elektrisch leitfähig verbunden sein.

Eine weitere, vorteilhafte Ausführungsvariante der Erfindung sieht vor, dass die Baueinheit wenigstens eine Absicherungsvorrichtung gegen elektrische Fehlfunktionen aufweist. Das heißt, dass neben dem wenigstens einen elektrischen Stromverteiler und dem wenigstens einen Gleichspannungswandler auch eine oder mehrere (elektrische und/oder elektronische) Absicherungsvorrichtungen in der gemeinsamen Baueinheit integral zusammengefasst sein können. Beispielsweise kann eine solche Absicherungsvorrichtung in Form einer Schaltung ausgebildet sein, mit der sich elektrische Fehlfunktionen, wie etwa (harte) Kurzschlüsse, elektrische und/oder thermische Überlasten oder Lichtbögen erkennen oder erfassen beziehungsweise detektieren lassen. Die Absicherungsvorrichtung kann beispielsweise durch die Integration von einem oder mehreren Halbleiterschaltern bei Erkennung oder Erfassung einer elektrischen Fehlfunktion bestimmte oder sämtliche Funktionen beziehungsweise elektrischen Verbindungen der Baueinheit deaktivieren beziehungsweise unterbrechen.

Alternativ oder zusätzlich dazu kann die Absicherungsvorrichtung auch dazu eingerichtet sein, eine elektrische Strommessung vorzunehmen und dadurch die elektrische Energie innerhalb der Baueinheit und/oder des Bordnetzes betragsmäßig zu steuern. Diese Steuerung kann entweder durch eine Implementierung innerhalb der Baueinheit oder durch ein separates, mit der Baueinheit kommunizierendes Steuergerät des Fahrzeugs erfolgen.

Für eine dezentrale Steuerung/Regelung der Baueinheit beziehungsweise des wenigstens einen elektrischen Stromverteilers und/oder des Gleichspannungswandlers hat es sich als vorteilhaft erwiesen, wenn die Baueinheit eine integrierte Steuervorrichtung, insbesondere einen Mikrocontroller, eine oder mehrere Schaltungen oder dergleichen, zum Schalten von Lasten, zur Schaltsteuerung und/oder zur Steuerung der Datenkommunikation aufweist. Durch die in die Baueinheit integrierte, gemeinsame Steuervorrichtung können gegenüber einer räumlich getrennten Anordnung von Stromverteiler und Gleichspannungswandler elektrische und/oder elektronische Bauelemente, wie etwa Platinen, Verbindungsmittel oder dergleichen, eingespart werden, die bei einer räumlich getrennten Anordnung mehrfach vorgesehen sein müssten.

In bevorzugten Ausführungsformen sind zwei, drei oder mehr der vorstehend beschriebenen Baueinheiten, in denen jeweils wenigstens ein elektrischer Stromverteiler und wenigstens ein Gleichspannungswandler räumlich zusammengefasst sind, innerhalb des Fahrzeugs verteilt angeordnet. Beispielsweise können eine erste Baueinheit im Frontbereich des Fahrzeugs und eine zweite Baueinheit im Heckbereich des Fahrzeugs angeordnet sein.

Diese verteilte Topologie von zwei oder mehr zusammengefassten Baueinheiten kann den Vorteil bieten, dass die jeweilige Baueinheit nur für die tatsächlich benötigte elektrische Leistung konstruktiv ausgelegt ist, so dass Gewicht, Bauraum und Kosten eingespart werden können. Zudem lässt sich die Ausfallwahrscheinlichkeit des Gesamtsystems, insbesondere des Fahrzeugs, reduzieren. Beispielsweise kann ein Notprogramm, eine so genannte limp-home-Funktion, umgesetzt werden, da bei Ausfall einer Baueinheit eine andere Baueinheit zumindest einen Teil der Funktionen mit übernehmen kann. Zudem kann diese verteilte Topologie eine zusätzliche Redundanz für sicherheitskritische Funktionen bereitstellen. Die einzelnen Baueinheiten können vergleichsweise leicht bauend ausgeführt werden, da die Leistungsanforderung an den wenigstens einen Stromverteiler und/oder Gleichspannungswandler vergleichsweise geringer sind. Es hat sich auch gezeigt, dass die einzelnen Baueinheiten für einen hinsichtlich ihrer Funktion optimalen Wirkungsgrad ausgelegt werden können, da die Leistungsbandbreite einer einzelnen Baueinheit vergleichsweise geringer ist. Das bewirkt eine vergleichsweise geringe elektrische Verlustleistung und spart damit Energie ein, so dass auch vergleichsweise geringe Anforderungen an die Kühlung der Baueinheit bestehen. Insbesondere kann dadurch ermöglicht werden, dass auf eine kostenintensive Flüssigkeits- oder Wasserkühlung verzichtet werden kann. Es kann auch eine Steuervorrichtung einer Baueinheit für eine andere Baueinheit mit verwendet werden, so dass in der anderen Baueinheit Bauraum und Kosten eingespart werden können. Auch der Aufwand hinsichtlich elektrischer Leitungen lässt sich durch diese verteilte Topographie verringern.

In einer besonders vorteilhaften Ausführungsvariante können die zwei oder mehr Baueinheiten über ein so genanntes Energiebackbone, insbesondere über eine Multischiene, elektrisch leitfähig miteinander verbunden sind. Vorzugsweise kann das Energiebackbone zwei oder mehr elektrische Stromverteiler von zwei oder mehr Baueinheiten elektrisch leitfähig und/oder kommunikationsfähig miteinander verbinden. Das Energiebackbone kann insbesondere für den oben genannten Hochvoltbereich ausgelegt sein.

Alternativ oder zusätzlich dazu können die zwei oder mehr Baueinheiten über wenigstens eine elektrische Backupleitung elektrisch leitfähig miteinander verbunden sein. Dies ermöglicht es, einen Funktionsausfall einer Baueinheit oder des Energiebackbones zu kompensieren, indem die andere oder die anderen Baueinheiten entsprechend (zu-)geschaltet werden. Hierfür können ein oder mehrere Schaltelemente, beispielsweise in Form so genannter Q-Dioden, verwendet werden, die entweder bei einem erfassten Spannungsabfall oder durch eine Signalansteuerung eine entsprechende Verbindung zwischen den elektrischen Stromverteilern und/oder Gleichspannungswandler der jeweiligen Baueinheiten schalten.

Ferner kann ein Fahrzeug-Bordnetz einen Hochvolt-Energiespeicher aufweisen, mit dem die hier offenbarte Versorgungseinrichtung verbunden ist oder verbindbar ist. Der Hochvolt-Energiespeicher kann über das beschriebene Energiebackbone mit den Baueinheiten der Versorgungseinrichtung verbunden sein. In dieser Ausführungsform kann der Gleichspannungswandler mit einer Soll-Spannung versorgt werden, die der von dem Hochvolt-Energiespeicher bereitgestellten Hochvoltspannung von über 60 V, beispielsweise über 450 V oder über 600 V entspricht. Innerhalb der Baueinheit ist der Gleichspannungswandler ausgelegt, die anliegende Hochvolt-Spannung in 12 V oder 48 V zu wandeln. In einer alternativen Ausführungsform, wenn eine Baueinheit beispielsweise zwei Gleichstromwandler aufweist, kann der eine Gleichstromwandler einen Soll-Spannungswert von 12 V und der andere Gleichspannungswandler eine Soll-Spannung von 48 V bereitstellen. So können die von den Gleichspannungswandlern gespeisten Stromverteiler dann jeweils 12 V beziehungsweise 48 V bereitstellen. Ein zusätzlicher Stromverteiler kann die Spannung des Hochvolt-Energiespeichers beziehungsweise die an der Baueinheit anliegende Spannung verteilen.

Ferner kann, wenn das Energiebackbone eine Spannung von 48 V aufweist, der Gleichspannungswandler ausgebildet sein, die anliegenden 48 V in 12 V zu wandeln und diese 12 V können dann als Soll-Spannungswert dem elektrischen Stromverteiler der Baueinheit zugeführt und von dieser verteilt werden. In einer optionalen Ausführungsform kann diese Baueinheit einen zweiten Stromverteiler aufweisen, der eingerichtet ist, die am Energiebackbone anliegenden 48 V zu verteilen.

Entsprechend der Erfindung sind in der Baueinheit Energiepufferspeicher, ausgeführt als chemischer Speicher für die Speicherung elektrischer Energie, bestehend aus einer Anzahl von in Reihe geschalteten Powerzellen, vorgesehen. Dies bietet verschiedene Vorteile. Ein in die Baueinheiten integrierter Energiepufferspeicher kann ohne oder mit sehr wenig zusätzlichem Bauraum realisiert werden. So können der Stromverteiler und der Pufferspeicher gestapelt angeordnet werden. Wenn die Baueinheit in einem Gehäuse untergebracht ist, ist aufgrund der Größe der Lastanschlüsse bereits eine Mindestbauhöhe des Gehäuses notwendig. So kann der Energiepufferspeicher flächig am Boden des Gehäuses angeordnet sein und von dem Stromverteiler und dem Gleichspannungswandler bedeckt werden. Ein weiterer Vorteil ist, dass der Gleichspannungswandler nur auf die Nennleistung ausgelegt sein muss oder auf 80% der Spitzenlast. Leistungsspitzen können von dem Energiepufferspeicher abgedeckt beziehungsweise versorgt werden. Hierdurch können Kosten und Bauraum eingespart werden.

Die Anzahl von Powerzellen können in Reihe geschaltet sein, um die notwendige Nennspannung zu erreichen. Jede der Powerzellen kann bauartbedingt eine Zellspannung zwischen 1 V und 5 V aufweisen. Bei den Powerzellen kann es sich um Lithiumtitanat-Akkumulatoren oder Titanatzellen handeln. Diese können eine gesinterte Anode aus Lithiumtitanspinell (Li₄Ti₅O₁₂) umfassen. Bei den Powerzellen kann es sich um Lithium-Eisenphosphat-Zellen beziehungsweise Eisenphosphat-Zellen, d.h. Lithium-Eisenphosphat-Akkumulatoren (LiFePO4-Akkumulator) handeln. Bei dieser Version des Lithium-Ionen-Akkumulators wird die herkömmliche Lithium-Cobaltoxid-Kathode durch eine Lithium-Eisenphosphat-Kathode ersetzt. Alternativ kann es sich bei den Powerzellen auch um Lithium-Mangan-Akkumulatoren oder Lithium-Luft-Akkumulatoren handeln.

Die Anzahl der notwendigen Powerzellen ergibt sich aus der Nennspannung des zugeordneten Stromverteilers. In einer günstigen Weiterentwicklung wird zumindest eine Powerzelle, über die Anzahl hinaus, die als rechnerisch benötigt bestimmt ist, in Reihe geschaltet. Dabei kann angestrebt werden, dass die Powerzellen in der Regel nur bis maximal etwa 80 % geladen werden, um die Lebensdauer zu erhöhen und gleichzeitig die Ladezeit zu reduzieren. So wird die Belastung der Powerzellen reduziert. So kann der Energiepufferspeicher auf ein Ladefenster von etwa 40 % bis 80 % - rein chemisch - eingestellt werden. Somit können auch Überlastszenarien ohne Schaden an dem Energiepufferspeicher ausgeglichen oder abgefangen werden.

Bei einer angenommenen Zellspannung von 2,4 V können sechs Zellen in Reihe geschaltet werden, um einen Energiepufferspeicher mit einer Nennspannung von 14,4 V zu erhalten. Um die Lebensdauer zu erhöhen, kann nun zumindest eine siebte Powerzelle in Reihe geschaltet werden. Um einen Energiepufferspeicher für 48 V zu erhalten, können die vierfache Anzahl jeweils verwendet werden und in Reihe geschaltet werden.

In einer besonders günstigen Ausführungsform kann der Energiepufferspeicher - auch im Sinne der funktionalen Sicherheit - als ein eigensicherer Energiespeicher ausgebildet sein. Um die funktionale Sicherheit weiter zu erhöhen, kann der Energiepufferspeicher elektrisch nicht-trennbar mit dem zugeordneten elektrischen Stromverteiler der Baueinheit elektrisch verbunden werden. In einem Fehlerfall kann der Energiepufferspeicher geopfert werden, sichert aber ganz im Sinne der funktionalen Sicherheit systemkritische Komponenten des Fahrzeugs ab.

Alternativ kann eine Schmelzsicherung vorgesehen sein, um den Energiepufferspeicher vor extremen Strömen und ergänzend oder alternativ vor extremen Spannungen zu schützen. Die Schmelzsicherung erfüllt dabei die Funktion einer Notsicherung.

Der Energiepufferspeicher kann derart dimensioniert sein, um die daran angeschlossenen, für die funktionale Sicherheit relevanten Lasten für die Dauer von bis zu 2 Minuten, besser bis zu 5 Minuten, insbesondere am besten bis zu 10 Minuten mit elektrischer Energie zu versorgen. So ist die Größe des Energiepufferspeichers von dem Fahrzeug, in dem die Versorgungseinrichtung zum Einsatz kommt, abhängig. Für eine erste Systemauslegung kann dabei mit einer Kapazität von 2,4 Ah bis 3 Ah gerechnet werden.

Die Erfindung bezieht sich auch auf ein Bordnetz eines Fahrzeugs, mit wenigstens einer elektrischen Versorgungseinrichtung in einer oder mehreren der vorstehend erläuterten Ausführungsvarianten. Ein solches Bordnetz zeichnet sich insbesondere durch seine Ausfallsicherheit, seine vergleichsweise geringe elektrische Leistungsaufnahme sowie vergleichsweise geringe Herstellungskosten aus.

In einer günstigen Ausführungsform kann die elektrische Versorgungseinrichtung des Bordnetzes mit einer Spannung von 48 V oder einer Spannung im Hochvolt-Bereich von über 60 V, insbesondere über 400 V, insbesondere über 600 V gespeist werden.

### Kurze Figurenbeschreibung

Nachfolgend werden vorteilhafte Ausführungsbeispiele der Erfindung unter Bezugnahme auf die begleitenden Figuren erläutert. Es zeigen:
- Figur 1: ein schematisches Blockschaltbild eines Fahrzeugs mit einer ersten beispielhaften elektrischen Versorgungseinrichtung,

- Figur 2: ein schematisches Blockschaltbild eines Fahrzeugs mit einer zweiten beispielhaften elektrischen Versorgungseinrichtung,

- Figur 3: ein schematisches Blockschaltbild eines Fahrzeugs mit einer dritten beispielhaften elektrischen Versorgungseinrichtung,

- Figur 4: ein schematisches Blockschaltbild eines Teilausschnitts einer vierten beispielhaften elektrischen Versorgungseinrichtung,
- Figur 5: ein schematisches Blockschaltbild eines Teilausschnitts einer erfindungsgemäßen elektrischen Versorgungseinrichtung in einem fünften Ausführungsbeispiel,
- Figur 6: ein schematisches Blockschaltbild eines Teilausschnitts sechsten beispielhaftenelektrischen Versorgungseinrichtung,
- Figur 7: ein schematisches Blockschaltbild eines Teilausschnitts einer erfindungsgemäßen elektrischen Versorgungseinrichtung in einem siebten Ausführungsbeispiel,
- Fig. 8: eine Variante der in Fig. 7 dargestellten Versorgungseinrichtung,
- Fig. 9: eine dreidimensionale Darstellung der in den folgenden Figuren dargestellten erfindungsgemäßen Baueinheit,
- Fig. 10: eine Seitenansicht der in Fig. 9 dargestellten erfindungsgemäßen Baueinheit,
- Fig. 11: eine weitere Seitenansicht der in Fig. 9 und 10 dargestellten erfindungsgemäßen Baueinheit,
- Fig. 12: eine Schnittdarstellung der in Fig. 9 bis 11 dargestellten erfindungsgemäßen Baueinheit,
- Fig. 13: eine Schnittdarstellung der in Fig. 9 bis 12 dargestellten erfindungsgemäßen Baueinheit, und
- Fig. 14: eine Aufsicht der in Fig. 9 bis 13 dargestellten erfindungsgemäßen Baueinheit.

Die Figuren sind lediglich schematische Darstellungen und dienen nur der Erläuterung der Erfindung. Gleiche Elemente sind durchgängig mit den gleichen Bezugszeichen versehen.

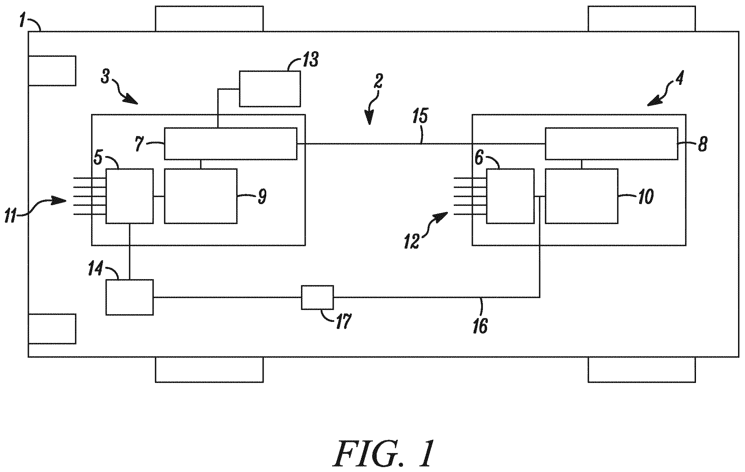

Figur 1 zeigt in einem grob schematischen Blockschaltbild ein Fahrzeug 1, insbesondere einen Teilausschnitt eines (Mehrspannungs-)Bordnetzes des Fahrzeugs 1. Bei dem Fahrzeug 1 kann es sich beispielsweise um ein Kraftfahrzeug, ein Hybrid- oder Elektrofahrzeug handeln.

Das Fahrzeug 1 weist eine elektrische Versorgungseinrichtung 2 für das Bordnetz auf, um dieses mit elektrischer Energie zu versorgen. Die elektrische Versorgungseinrichtung 2 verfügt in diesem Ausführungsbeispiel über eine erste (integrale) Baueinheit 3 und eine zweite (integrale) Baueinheit 4, die prinzipiell jeweils durch ein Gehäuse ausgebildet sind. Das jeweilige Gehäuse der beiden Baueinheiten 3 und 4 kann beispielsweise aus einem für den Einsatz in dem Fahrzeug 1 geeigneten Kunststoff gefertigt sein. Die erste Baueinheit 3 ist im Frontbereich des Fahrzeugs 1, die zweite Baueinheit 4 ist im Heckbereich des Fahrzeugs 1, also im Fahrzeug 1 verteilt angeordnet.

Jede der beiden Baueinheiten 3 und 4 weist einen ersten elektrischen Stromverteiler 5 beziehungsweise 6 auf, wobei der erste elektrische Stromverteiler 5, 6 hier jeweils für einen Soll-Spannungswert von etwa 12V eingerichtet ist. Zudem weist jede Baueinheit 3, 4 einen zweiten elektrischen Stromverteiler 7 beziehungsweise 8 auf, der hier jeweils für den Hochvoltbereich, das heißt für einen Soll-Spannungswert von 60V oder mehr ausgelegt ist. Des Weiteren verfügt jede Baueinheit 3, 4 über einen Gleichspannungswandler 9 beziehungsweise 10, der hier jeweils für eine Spannungswandlung aus dem Hochvoltbereich, das heißt von mehr als 60Volt, zu einem Soll-Spannungswert von etwa 12V eingerichtet ist.

Aus Figur 1 geht hervor, dass der erste elektrische Stromverteiler 5 beziehungsweise 6 jeweils dazu eingerichtet sind, eine Vielzahl von elektrischen Verbrauchern 11 beziehungsweise 12 mit elektrischer Energie zu versorgen. Zudem ist erkennbar, dass jeder Gleichspannungswandler 9 beziehungsweise 10 eingangsseitig mit dem jeweiligen zweiten elektrischen Stromverteiler 7 beziehungsweise 8 und ausgangsseitig mit dem jeweiligen ersten elektrischen Stromverteiler 5 beziehungsweise 6 elektrisch leitfähig verbunden sind. Auf diese Weise wird die vom jeweiligen zweiten elektrischen Stromverteiler 7 beziehungsweise 8 angelegte elektrische Spannung im Hochvoltbereich auf den Soll-Spannungswert für den jeweiligen ersten elektrischen Stromverteiler 5 beziehungsweise 6 umgewandelt.

In Figur 1 ist auch erkennbar, dass der zweite elektrische Stromverteiler 7 der ersten Baueinheit 3 mit einer ersten elektrischen Energiequelle 13 in Form einer Hochvolt-Batterie elektrisch leitfähig verbunden ist, über die das Bordnetz zumindest teilweise gespeist wird. Zudem geht aus Figur 1 hervor, dass der erste elektrische Stromverteiler 5 der ersten Baueinheit 3 mit einer zweiten elektrischen Energiequelle 14 elektrisch leitfähig verbunden ist, bei der es sich hier um eine 12V-Batterie handelt. Es ist auch zu erkennen, dass die erste Baueinheit 3 und die zweite Baueinheit 4 über ein so genanntes Energiebackbone 15 elektrisch leitfähig und/oder kommunikationsfähig miteinander verbunden sind, wobei es sich bei dem Energiebackbone um eine Multischiene, also um eine Art Mehrschichtleiter handeln kann.

Zudem sind die erste Baueinheit 3 und die zweite Baueinheit 4 über eine elektrische Backupleitung 16 elektrisch miteinander verbunden, nämlich über den jeweiligen ersten elektrischen Stromverteiler 5 beziehungsweise 6 und die dazwischen geschaltete, zweite elektrische Energiequelle 14. Zwischen Der zweiten elektrischen Energiequelle 14 und der zweiten Baueinheit 4 ist ein Schaltelement 17 für die elektrische Backupleitung 16 angeordnet, das als so genannte Q-Diode ausgebildet sein kann und das unter anderen bei einem auftretenden und/oder erfassten Spannungsabfall insbesondere im Hochvoltbereich oder, alternativ dazu, durch ein entsprechendes Schaltsignal die beiden 12V-Bereiche der ersten und zweiten Baueinheit 3 und 4 elektrisch leitfähig miteinander verbindet.

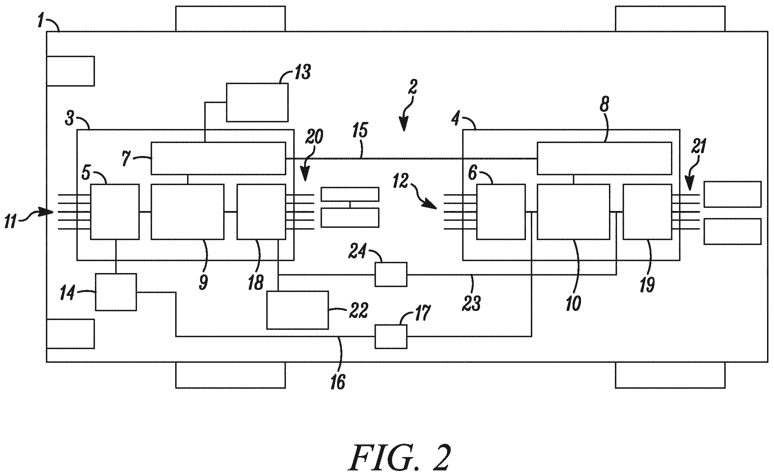

Figur 2 zeigt in einem schematisch dargestellten Blockschaltbild ein zweites Beispiel der elektrischen Versorgungseinrichtung 2 des Fahrzeugs 1. Abweichend von dem ersten Beispiel ist der jeweilige Gleichspannungswandler 9 beziehungsweise 10 dazu eingerichtet, eine eingangsseitige elektrische Spannung im Hochvoltbereich ausgangsseitig sowohl zu einem Soll-Spannungswert von etwa 12V als auch in einen Soll-Spannungswert von etwa 48V umzuwandeln. Darüber hinaus ist in Figur 2 zu erkennen, dass die erste Baueinheit 3 und die zweite Baueinheit 4 jeweils einen weiteren elektrischen Stromverteiler aufweisen, nämlich jeweils eine dritten elektrischen Stromverteiler 18 beziehungsweise 19. Jeder dritte elektrische Stromverteiler 18 beziehungsweise 19 ist zur Speisung eines Spannungswerts von etwa 48V ausgelegt und elektrisch leitfähig mit dem jeweiligen Gleichspannungswandler 9 beziehungsweise 10 verbunden. Ferner ist jeder dritte elektrische Stromverteiler 18 beziehungsweise 19 dazu eingerichtet, eine Vielzahl von elektrischen Verbrauchern 20 beziehungsweise 21 mit elektrischer Energie zu versorgen.

Zudem geht aus Figur 2 hervor, dass der dritte elektrische Stromverteiler 18 der ersten Baueinheit 3 elektrisch leitfähig mit einer dritten elektrischen Energiequelle 22 sowie über eine weitere elektrische Backupleitung 23 mit dem dritten elektrischen Stromverteiler 19 der zweiten Baueinheit 3 elektrisch leitfähig verbunden ist. Es ist auch zu erkennen, dass zwischen den dritten elektrischen Stromverteilern 18 beziehungsweise 19 ein weiteres Schaltelement 24 angeordnet ist, das als so genannte Q-Diode ausgebildet sein kann und das unter anderen bei einem auftretenden und/oder erfassten Spannungsabfall insbesondere im Hochvoltbereich oder, alternativ dazu, durch ein entsprechendes Schaltsignal die beiden 48V-Bereiche der ersten und zweiten Baueinheit 3 und 4 elektrisch leitfähig miteinander verbindet.

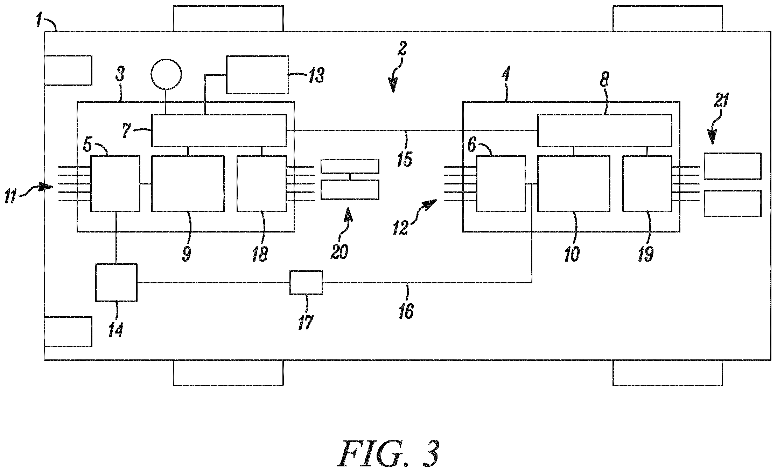

Figur 3 zeigt in einem schematischen Blockschaltbild ein drittes Beispiel der elektrischen Versorgungseinrichtung 2 des Fahrzeugs 1. Abweichend von Figur 2 sind hier die weitere elektrische Backupleitung 23 nicht vorgesehen. Außerdem handelt es sich bei der ersten elektrischen Energiequelle 13 nicht um eine Hochvolt-Batterie, sondern um eine 48V-Batterie.

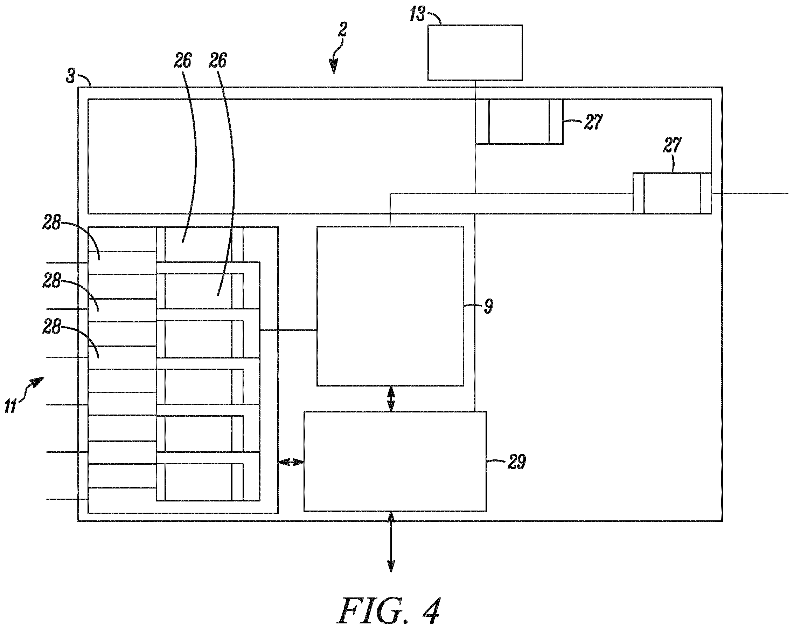

In Figur 4 ist in einem vierten Ausführungsbeispiel ein Teilausschnitt der elektrischen Versorgungseinrichtung 2 in einem schematischen Blockschaltbild gezeigt. In diesem Ausführungsbeispiel sind die erste Baueinheit 3 und/oder die zweite Baueinheit 4 für den Hochvolt-Bereich und den 12V-Bereich ausgelegt. Abweichend von den vorstehend erläuterten Ausführungsbeispielen verfügt die dargestellte erste Baueinheit 3 über eine elektrische Absicherungsvorrichtung 25, die zur Absicherung der elektrischen Versorgungseinrichtung 2 und/oder dem Bordnetz des Fahrzeugs 1 dient. Die Absicherungsvorrichtung 25 umfasst in diesem Ausführungsbeispiel eine Absicherungseinheit 26 zur Erkennung einer elektrischen und/oder thermischen Überlast sowie von Lichtbögen, eine weitere Absicherungseinheit 27 als differentialen Sensor zur Erkennung einer elektrischen und/oder thermischen Überlast sowie Lichtbögen in Sammelleitungen und eine Auslöseeinheit 28 zur Erkennung von harten Kurzschlüssen und zum Schalten von elektrischen Lasten. Die Absicherungseinheit 27, insbesondere die Auslöseeinheit 28, können beispielsweise ansteuerbare Halbleiterschalter umfassen.

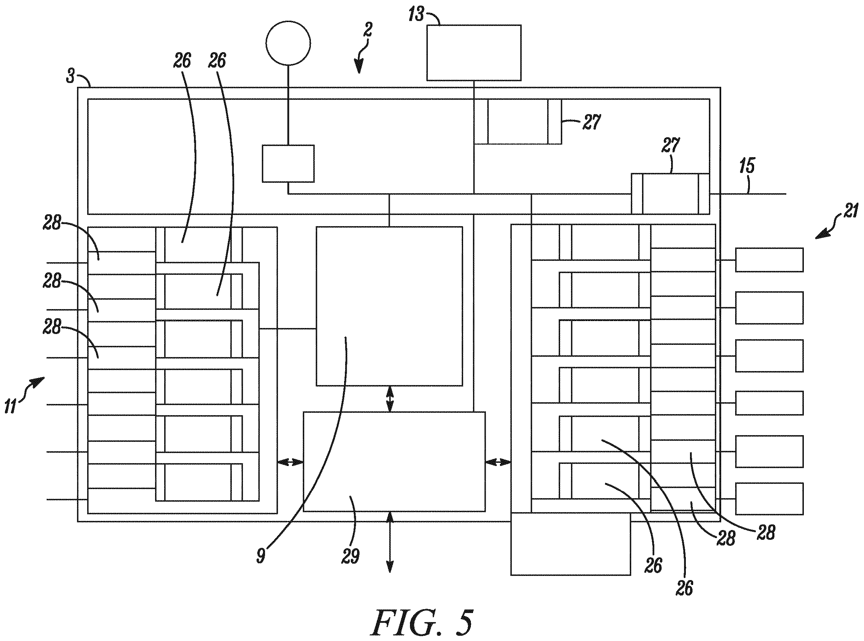

Figur 5 zeigt in einem fünften Ausführungsbeispiel einen Teilausschnitt der elektrischen Versorgungseinrichtung 2 in einem schematischen Blockschaltbild. Abweichend von Figur 4 sind die erste Baueinheit 3 und/oder die zweite Baueinheit 4 für den 12V-Bereich und den 48V-Bereich ausgelegt. Dementsprechend weisen die erste Baueinheit 3 und/oder die zweite Baueinheit 4 den dritten elektrischen Stromverteiler 19 auf. Zusätzlich zu den vorstehend erläuterten Beispielen weist wenigstens einer der beiden Baueinheiten eine (elektronische) Steuervorrichtung 29, zum Beispiel in Form einer elektronischen Schaltung oder eines Mikrocontrollers auf, die zur Schaltsteuerung und/oder Steuerung der Datenkommunikation innerhalb des Fahrzeugs eingerichtet ist. Aus Figur 5 geht hervor dass die Steuervorrichtung 29 hierzu entsprechende Schnittstellen zu den übrigen, integralen Bestandteilen der jeweiligen Baueinheiten 3 beziehungsweise 4 und darüber hinaus nach außen, das heißt zu weiten Komponenten des Bordnetzes und/oder des Fahrzeugs 1 aufweist.

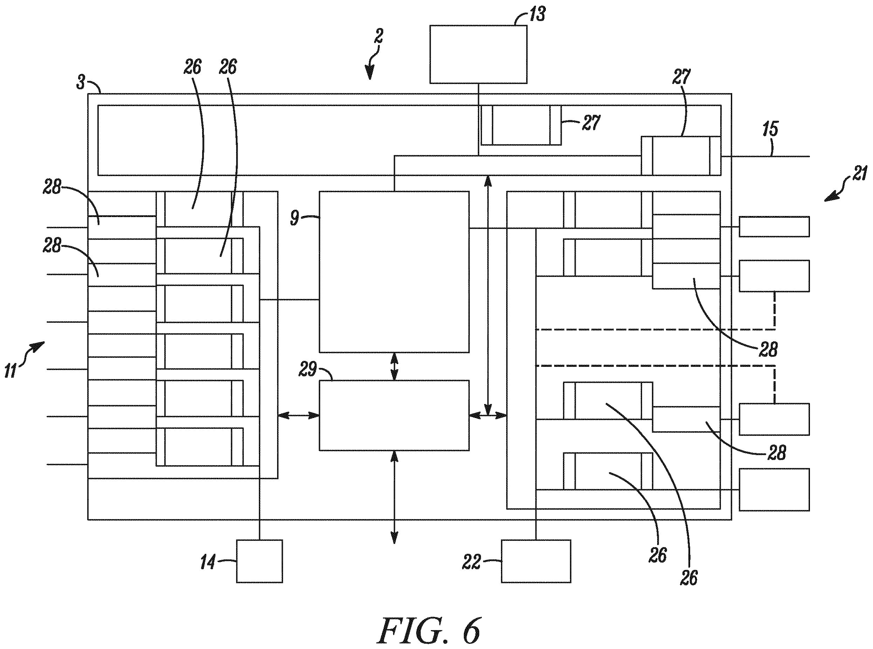

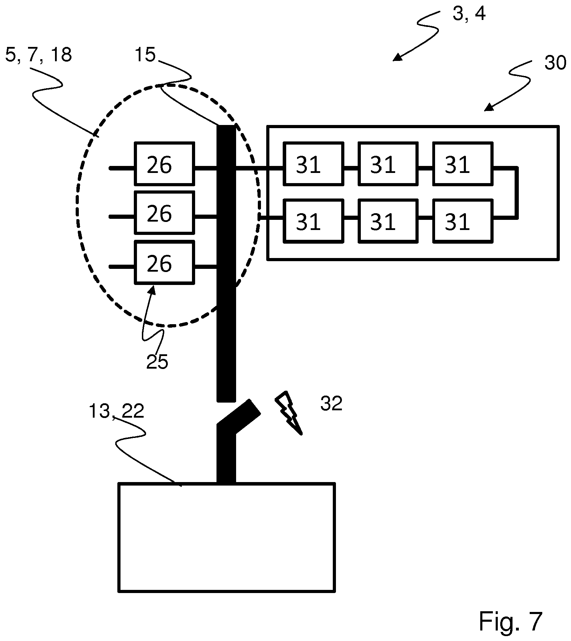

In Figur 6, die ein schematisches Blockschaltbild eines Teilausschnitts der elektrischen Versorgungseinrichtung 2 zeigt, ist zu erkennen, dass die erste Baueinheit 3 und/oder die zweite Baueinheit 4 abweichend zu den Figuren 4 und 5 hier auch für den Hochvoltbereich ausgelegt sind. Dementsprechend sind die Gleichspannungswandler 9 und/oder 10 mit der ersten elektrischen Energiequelle 13 elektrisch leitfähig verbunden. Figur 7 zeigt eine weitere Variante eines Aspekts der Versorgungseinrichtung 2 als schematisches Blockschaltbild. In Fig. 7 sind an einem Energiebackbone 15 ein Stromverteiler 5, 7, 18 und ein Energiepufferspeicher 30 angeschlossen. Der Stromverteiler 5, 7, 18 weist in dem dargestellten Ausführungsbeispiel eine Absicherungsvorrichtung 25 auf. Die Absicherungsvorrichtung 25 ist aus einer Anzahl von Absicherungseinheiten 26, über die eine Reihe von Lastanschlüssen individuell abgesichert ist, aufgebaut.

Der Energiepufferspeicher 30 und der Stromverteiler 5, 7, 18 sind zu einer Baueinheit 3, 4 zusammengefasst.

Ein Schalter 32 im Energiebackbone 15 symbolisiert eine fehlerbedingte Unterbrechung des Energiebackbones 15. Über den Schalter 32 ist gemäß Fig. 7 ein Energiespeicher 13, 22 mit dem Energiebackbone 15 verbunden. Somit sind der Energiepufferspeicher 30 und der Energiespeicher 13, 22 elektrisch parallel geschaltet. Wenn der Energiespeicher 13, 22 durch einen Fehler nicht zur Verfügung steht, so "springt" der Energiepufferspeicher 30 ein. Letzterer wird kontinuierlich über das Energiebackbone 15 geladen.

In einem bevorzugten Ausführungsbeispiel ist der Energiepufferspeicher derart dimensioniert, dass er im Regelbetrieb zu maximal 80 % geladen wird, um einer frühzeitige Alterung zu vermeiden. Auch ein Entladen unter 40 % ist dann systembedingt ausgeschlossen - außer in einem Fehlerfall. In einem Fehlerfall kann der Energiepufferspeicher geopfert werden, um ganz im Sinne der funktionalen Sicherheit einen sicheren Betrieb des Fahrzeugs zu ermöglichen.

Eine Motivation für die in Fig. 7 dargestellte Lösung sind im Stand der Technik unzureichende Lösungen zum Thema intelligenter Verteiler oder dezentrale DC/DC-Versorgung, oft gekoppelt mit der Bauraumproblematik. Dabei wird gleichzeitig eine Spannungsstabilisierung sowohl im 12-V-Bordnetz als auch im 48-V-Bordnetz erzielt.

Mit dem in Fig. 7 dargestellten Ausführungsbeispiel wird die funktionale Sicherheit im Fahrzeug, wie beispielsweise Notlaufeigenschaften verbessert. Dabei werden die immer höheren Bauraumanforderungen im modernen Kraftfahrzeug mit mehreren Spannungsebenen durch die Integration von mehreren Funktionseinheiten in eine Baueinheit 3, 4 gelöst.

Der Energiepufferspeicher 30 wird aus elektrisch in Reihe geschalteten Powerzellen 31 gebildet. Je nach Ausführung kommen hier Rundzellen oder prismatische Zellen, beispielsweise als Titanatzellen oder Eisenphosphatzellen, zum Einsatz.

Die Erfindung ermöglicht die Integration der benötigten Pufferleistung auf kleinem Bauraum z.B.: in einer Baueinheit, wie sie in Fig. 1 bis Fig. 6 dargestellt ist oder in einem beliebigen Stromverteiler. Mittels Energiepufferspeicher 30 wird erreicht, dass der lokale DC/DC-Wandler auf die Nennleistung ausgelegt werden kann und dadurch weniger Spitzenlast zur Verfügung stellen muss.

Der lokale Energiepufferspeicher 30 muss demnach nur eine kurze Zeit überbrücken und kann dementsprechend kleiner ausfallen. Dadurch wird eine Konsistenz zwischen elektronischem Aufwand und der benötigten Leistung erreicht. Dadurch ist eine vollständige Integration in einem Stromverteiler 5, 7, 18 möglich. Bei der Kombination z.B. mit konventionellen Sicherungen wird das lokale Störungsereignis durch den Energiepufferspeicher 30 soweit abgefangen, dass die Schutzmaßnahme greifen kann, bevor das allgemeine Bordnetz beeinträchtigt wird. Bei der Kombination mit elektronischen Sicherungen 26 kann z.B. im Falle eines Verlustes des Bordnetzes oder Teilen davon, der am Verteiler 5, 7, 18 angeschlossene Verbraucher für eine bestimmte Zeit (abhängig von der Speichergröße) weiter betrieben und gleichzeitig oder alternativ in einen sicheren Zustand geführt werden.

Durch die leistungsgerechte Ausführung des DC/DC-Wandlers und des Energiepufferspeicher 30 ist eine Integration in einen Stromverteiler 5, 7, 18 möglich. Dadurch ergeben sich Bauraumvorteile und Synergien bei der Funktionsaufteilung. Desweiteren lassen sich sicherheitskritische Funktionen im 12-V- und 48-V-Bordnetz unterstützen. Durch die Stabilisierung des Bordnetzes durch den Energiepufferspeicher 30 ist die konventionelle Sicherung als Schutzmaßnahme weiterhin situativ verwendbar. Es ergeben sich auch Potentiale bei der Querschnittsreduktion des Energiebackbones 15 dahingehend, dass der Leitungsquerschnitt optimiert auf den Nennstrom ausgelegt werden kann. Der Einsatz von konventionellen Sicherungen ist im Allgemeinen als kostengünstig anzusehen. Sicherheitsrelevante Verbraucher können durch eine Variante des dargestellten Ausführungsbeispiels im Fehlerfall in einen sicheren Zustand gebracht werden und/oder funktional gehalten werden. Der Energiepufferspeicher 30 kann mit und ohne spezielle Ladetechnik ausgeführt werden. Beim Betrieb direkt am 12-V- und 48-V-Bordnetz sind die Betriebsparameter des Energiepufferspeichers 30 so zu wählen, dass diese die Betriebsparameter den Bordnetzspeicher mit einschließen.

Die Integration des Energiepufferspeichers 30 in die Baueinheit 3, 4 schafft einen Bauraumvorteil durch Nutzung des Bauraumes, welcher bereits für den Stromverteiler 5, 6, 7, 8, 18, 19 vorgesehen ist. Auch eine zweiteilige Anordnung oder Nutzung anderweitigen Bauraumes ist durch die flexible Anordnung gegeben. Durch eine Stapel-Anordnung verändert sich die Grundfläche nicht und die Baueinheit 3, 4 kann in die Höhe wachsen. Dieser zusätzliche Bauraum in einer Dimension (Höhe) kann durch Auswahl geeigneter Zelltypen und der gewünschten Überbrückungskapazität beeinflusst werden. Damit lassen sich auch Modulansätze umsetzen, somit ist die Verteilerelektronik als Standard und das Batteriemanagementsystem als anpassbare Komponente umzusetzen, welche an den jeweilig gewählten Zelltyp anpassbar ist.

Der Stromverteiler 5, 7, 18 und der Energiepufferspeicher 30 sind (elektrisch) direkt miteinander verbunden. Im Falle eines Ausfalls der Hauptbatterie 13, 22 beziehungsweise Energiespeicher oder Energiequelle 13, 22 kann der lokale Energiepufferspeicher 30 eine vorbestimmbare Zeit überbrücken. Damit ist das System in einen sicheren Zustand überführbar, die vorbestimmbare Zeit kann durch die Kapazität der angeschlossenen lokalen Powerzellen 31 bestimmt werden. Der Energiepufferspeicher 30 kann so ausgelegt werden, dass ein zusätzlicher DC/DC-Wandler entfallen kann. Durch die lokale Stützung der Spannung wird das Auslösen einer Schutzmaßnahme unterstutzt, da ein leitungsgebundener Spannungsabfall minimiert wird. Desweiteren werden Strom und Spannungsspitzen durch den lokalen Energiepufferspeicher 30 gemildert oder abgefangen.

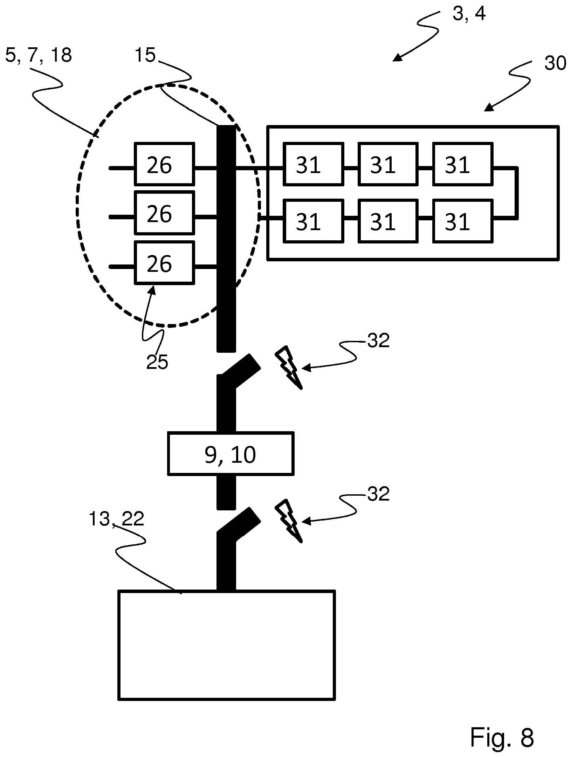

Die in Fig. 8 dargestellte Versorgungseinrichtung 2 weist zusätzlich zu der in Fig. 7 dargestellten Versorgungseinrichtung einen Gleichspannungswandler 9, 10 auf. Zusätzlich ist ein weiterer Schalter 32 als Repräsentant für eine Unterbrechung des Energiebackbones 15 in einem Fehlerfall dargestellt. Der Energiepufferspeicher 30 ist eingerichtet, um eine Unterbrechung der Spannungsversorgung in Stromflussrichtung vor und nach dem Gleichspannungswandler 9, 10 abzufangen und eine Stromversorgung für eine vorbestimmbare Zeit zu gewährleisten.

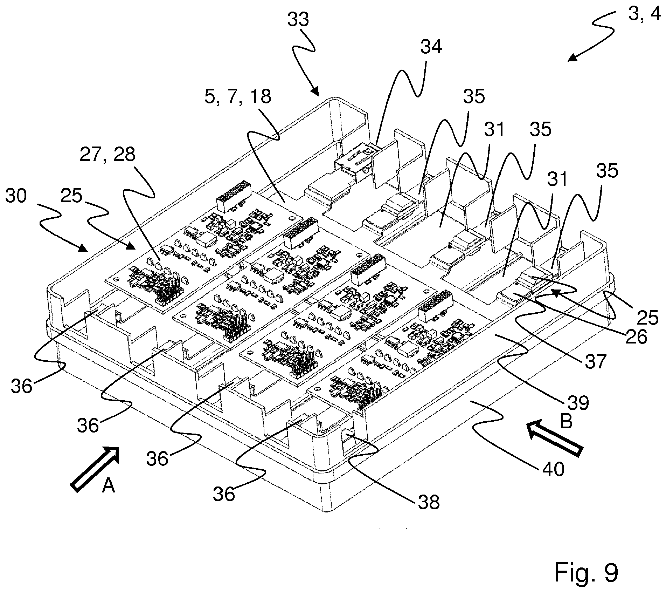

Fig. 9 zeigt eine dreidimensionale Darstellung eines Ausführungsbeispiels erfindungsgemäßen Baueinheit 3, 4. Bei der Baueinheit 3, 4 kann es sich um eine in den vorhergehenden Figuren beschriebene Variante einer Baueinheit 3, 4 handeln. Die Baueinheit 3, 4 ist von einem Gehäuse 33 umschlossen. Das Gehäuse 33 umfasst einen Stromverteiler 5, 7, 18 sowie einen damit elektrisch verbundenen Energiepufferspeicher 30. Der Stromverteiler 5, 7, 18 ist über einen Stromanschluss 34 mit einem Energiebackbone 15 verbindbar. In der dargestellten Variante handelt es sich bei dem Stromanschluss 34 um einen "männlichen" Stecker, der als Kontaktzunge ausgeformt ist. Dabei weist der Stromanschluss eine Sekundärverriegelung und eine Kontaktverriegelung auf. Die Lastanschlüsse 35, 36 sind jeweils über eine Absicherungsvorrichtung 25 mit dem Stromverteiler 5, 7, 18 verbunden. Die drei parallel zum Stromanschluss 34 angeordneten Lastanschlüsse 35 sind über als mechanische Sicherungen beziehungsweise Schmelzsicherungen ausgeführte Absicherungseinheiten 26 mit dem Stromverteiler 5, 7, 18 verbunden. Die auf der gegenüberliegenden Gehäuseseite angeordneten Lastanschlüsse 36 sind über als elektronische Sicherungen ausgeführte Absicherungseinheiten 27 oder als Auslöseeinheiten 28 abgesichert und mit dem Stromverteiler 5, 7, 18 verbunden. Dabei sind die Lastanschlüsse 35, 36 als Kontaktzungen ausgeformt. Über das Gehäuse 33 kann eine zusätzliche Verriegelung oder Sekundärverriegelung für die Lastanschlüsse 35, 36 geschaffen werden.

In dem in Fig. 9 dargestellten Ausführungsbeispiel sind die Absicherungsvorrichtungen über Durchsetzfügen mit dem Stromverteiler 5, 7, 18 verbunden. Alternativ kann eine Verbindung beispielsweise auch über Schweißen, Schrauben oder Stecken geschaffen werden.

Unterhalb der durch die Absicherungsvorrichtungen 25 und den Stromverteiler 5, 7, 18 gebildeten Ebene ist in dem Gehäuse 33 der Energiepufferspeicher 30 angeordnet.

Der Energiespeicher 30 wird wie in der Beschreibung zu Fig. 7 ausgeführt in dem dargestellten Ausführungsbeispiel aus sechs Powerzellen 31 gebildet, die elektrisch in Reihe geschaltet sind. Hierzu sind jeweils drei Powerzellen 31 unter den Lastanschlüssen 35 und drei Powerzellen 31 unter den Lastanschlüssen 36 in einer gemeinsamen Ebene angeordnet. Ein Pol (grundsätzlich Plus-Pol) der in Reihe geschalteten Powerzellen 31 ist mit dem Stromverteiler 5, 7, 18 unzertrennlich elektrisch verbunden. Ein zweiter Pol (grundsätzlich Minus-Pol) der in Reihe geschalteten Powerzellen 31 ist mit einem Masseanschluss 38 elektrisch gekoppelt. Der Masseanschluss 38 ist an einer dritten Gehäuseseite angeordnet und über eine Kontaktzunge mittels einer Kontaktbuchse kontaktierbar und mit Masse verbindbar.

Das Gehäuse ist dreiteilig aufgebaut: eine erste Gehäuseschale 39, eine zweite Gehäuseschale 40 sowie ein in Fig. 9 nicht dargestellter Gehäusedeckel. Der Stromanschluss 34, der Stromverteiler 5, 7, 18, die Absicherungsvorrichtung 25 sowie die Lastanschlüsse 35, 36 sind in der ersten Gehäuseschale 39 angeordnet. Die Powerzellen 31 des Energiespeichers 30 sind in der zweiten Gehäuseschale 40 angeordnet. Die beiden Gehäuseschalen 39, 40 sind derart gestapelt angeordnet, dass die erste Gehäuseschale 39 als Deckel für die zweite Gehäuseschale 40 fungiert und diese bis auf die Durchbrüche für eine Masseverbindung und die Anbindung des Energiespeichers 30 an den Stromverteiler 5, 7, 18 verschließt.

In einer nicht dargestellten Weiterentwicklung kann das Gehäuse 33 fluiddicht ausgestaltet sein. In diesem Fall sind die Lastanschlüsse 35, 36, der Stromanschluss 34 sowie der Masseanschluss 38 als fluiddichte Buchsen mit dem Gehäuse fluiddicht verbunden. Ferner sind die Gehäuseschalen 39, 40 und der Gehäusedeckel fluiddicht verbunden.

Das Gehäuse 33 der Baueinheit 3, 4 ist im Fahrzeug beispielsweise über zusätzliche (nicht dargestellte) Schraublaschen fixierbar. Alternativ kann es in einem Geräteträger beziehungsweise einem Geräterack eingeschoben und/oder verrastet werden. Hierzu können zusätzliche Rastnasen vorgesehen sein.

Wie bereits in der Beschreibung zu Fig. 7 ausgeführt, handelt es sich in einem Ausführungsbeispiel beim Energiepufferspeicher 30 um sechs Powerzellen 31 mit einer Nennspannung von jeweils 2,4 V. Dies ergibt bei einer Reihenschaltung eine Gesamtnennspannung des Energiepufferspeichers 30 von 14,4 V.

In einem nicht gezeigten Ausführungsbeispiel werden vier entsprechende Einheiten aus sechs Powerzellen gestapelt, um einen Energiepufferspeicher für eine 48-V-Applikation zu bekommen. Optional können dann zusätzlich von dem Energiespeicher 30 auch nach sechs Powerzellen 31 12 V abgegriffen werden, um zwei Spannungsebenen in einer Baueinheit 3, 4 mit einem Energiepufferspeicher 30 abzusichern.

Die weiteren Absicherungseinheiten 27 beziehungsweise Auslöseeinheiten 28 sind als elektronische Sicherungen ausgeführt. Hierzu sind Halbleiterbauelemente auf einer Platine angeordnet. Über Erweiterungsstecker können noch zusätzliche, nicht dargestellte Erweiterungsboards integriert werden oder eine Anzahl von Auslöseeinheiten 28 gekoppelt werden. Dabei wird in einer Variante eine Auslöseeinheit 28 als Master definiert und die weiteren hiermit verbundenen Auslöseeinheiten 28 als Slave. Über entsprechende Auswerteeinrichtungen kann eine Lichtbogenerkennung, eine Anschluss-Degradation oder andere Mess- und Diagnosemethoden integriert werden. Auch kann eine Vorladung realisiert werden. Über Diagnosemethoden kann verhindert werden, dass ein Anschluss bzw. Ausgang auf einen Kurzschluss geschaltet wird.

Das hier beispielhaft dargestellte Gehäuse 33 der Baueinheit 3, 4 weist eine Höhe von etwa 53 mm, eine Breite von etwa 210 mm und eine Länge von etwa 220 mm auf. Die eingesetzten Powerzellen 31 weisen eine Höhe von etwa 13 mm auf.

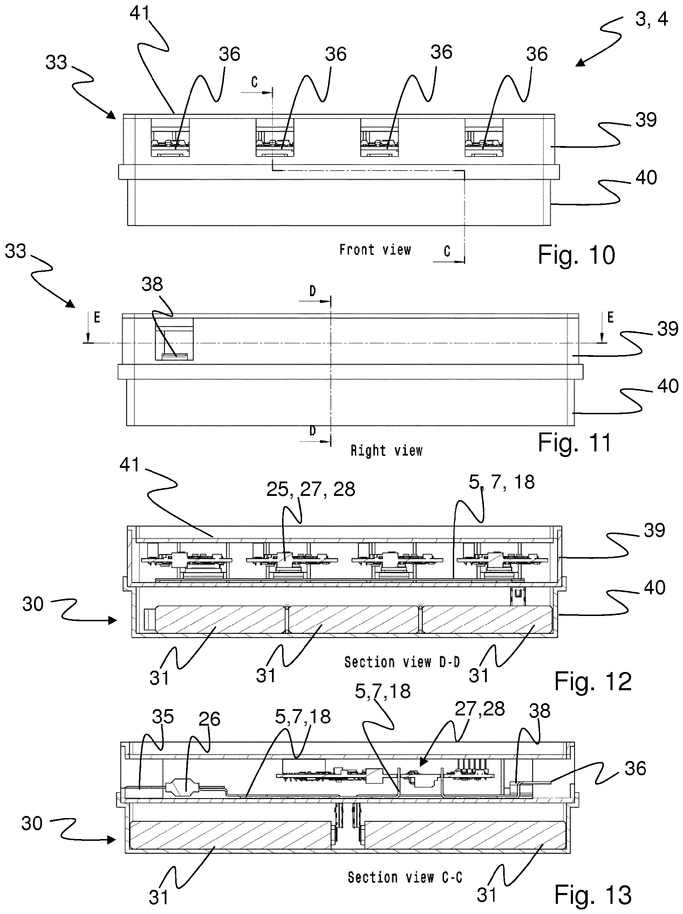

Ein mit A gekennzeichneter Pfeil zeigt eine Blickrichtung für eine Vorderansicht (Front view), wie diese in Fig. 10 dargestellt ist. Analog weist ein mit B gekennzeichneter Pfeil auf eine Blickrichtung für eine in Fig. 11 dargestellte Seitenansicht (Right view).

Fig. 10 zeigt eine Seitenansicht aus der in Fig. 9 als Ansicht A gekennzeichneten Vorderansicht der Baueinheit 3, 4. Zu sehen sind die beiden Gehäuseschalen 39, 40, mit vier Durchbrüchen für die Lastanschlüsse 36. Die erste Gehäuseschale 39 wird in der Darstellung oben von einem Gehäusedeckel 41 verschlossen.

Der mit CC gekennzeichnete (gestufte) Schnitt durch die Seitenansicht ist in Figur 13 dargestellt.

Fig. 11 zeigt eine Seitenansicht aus der in Fig. 9 als Ansicht B gekennzeichneten "rechten" Seitenansicht (bezogen auf die in Fig. 10 dargestellte Vorderansicht) der Baueinheit 3, 4. Zu sehen sind die beiden Gehäuseschalen 39, 40, mit einem Durchbruch für den Masseanschluss 38. Der Masseanschluss 38 ist als eine Kontaktlasche ausgeformt. In einer Variante ist der Durchbruch im Gehäuse 33 für den Masseanschluss 38 derart ausgeformt, dass mit einem korrespondierenden Stecker eine Sicherung mit Sekundärverastung realisiert ist. Die erste Gehäuseschale 39 wird in der Darstellung, wie bereits in Fig. 10 dargestellt, oben von einem Gehäusedeckel 41 verschlossen.

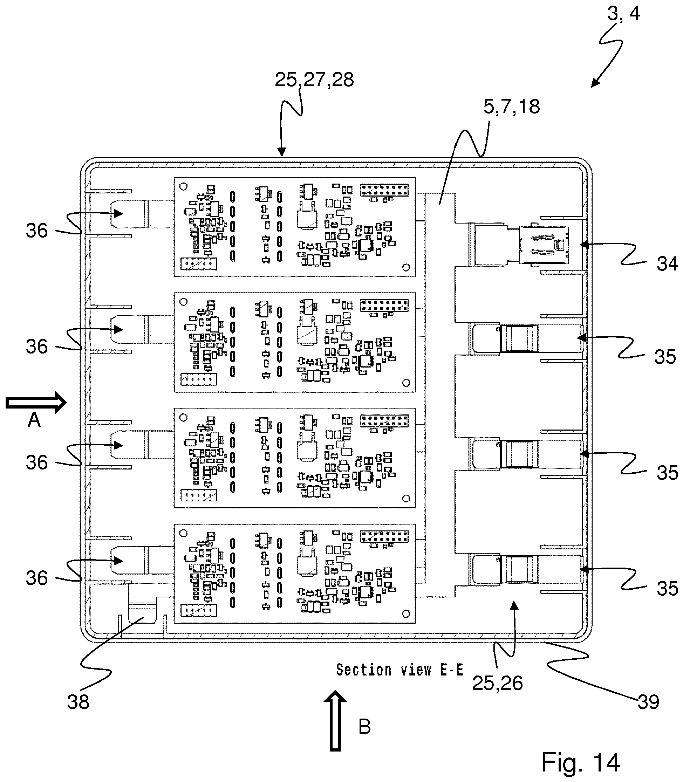

Der mit DD gekennzeichnete Schnitt durch die Seitenansicht ist in Figur 12 dargestellt. Der mit EE gekennzeichnete Schnitt durch die Seitenansicht ist in Figur 14 dargestellt. Dies entspricht somit einer Aufsicht auf die Baueinheit 3, 4 ohne Deckel 41.

Fig. 12 zeigt eine Schnittdarstellung der in Fig. 9 bis 11 dargestellten erfindungsgemäßen Baueinheit 3, 4. In der zweiten Gehäuseschale 40 sind drei Powerzellen 31 nebeneinander angeordnet. Im Schnitt DD sind die vier weiteren Absicherungseinheiten 27 beziehungsweise Auslöseeinheiten 28 geschnitten dargestellt.

In Fig. 12 ist der Aufbau des Gehäuses 33 gut zu erkennen. Der obere Rand der zweiten Gehäuseschale 40 ist nach außen gewölbt und stellt eine Aufnahme für die erste Gehäuseschale 39 dar. Der Boden der ersten Gehäuseschale trennt den von der zweiten Gehäuseschale 40 aufgespannten Raum mit den Powerzellen 31 von dem von der ersten Gehäuseschale 39 aufgespannten Sicherungsraum, welcher von dem Gehäusedeckel 41 verschlossen wird.

Fig. 13 zeigt eine Schnittdarstellung der in Fig. 9 bis 11 dargestellten erfindungsgemäßen Baueinheit gemäß dem in Fig. 10 dargestellten (gestuften) Schnitt CC. Die links dargestellte Powerzelle 31 ist mit dem Stromverteiler 5, 7, 18 elektrisch verbunden. Die rechts dargestellte Powerzelle 31 ist mit dem Masseanschluss 38 elektrisch verbunden. Der Masseanschluss 38 ist ferner mit den vier weiteren Absicherungseinheiten 27 beziehungsweise Auslöseeinheiten 28 elektrisch gekoppelt. Der Lastanschluss 35 ist über eine Schmelzsicherung 26 beziehungsweise Absicherungseinheit 26 mit dem Stromverteiler 5, 7, 18 elektrisch gekoppelt. Von dem Stromverteiler 5, 7, 18 verläuft eine Lasche zur Haupterstreckungsebene in Richtung der weiteren Absicherungseinheit 27 beziehungsweise Auslöseeinheit 28 und stellt für diese einen Stromanschluss bereit. In der Darstellung rechts stellt eine zweite Lasche eine elektrische Verbindung zwischen der weiteren Absicherungseinheit 27 beziehungsweise Auslöseeinheit 28 mit dem Lastanschluss 36 her.

Fig. 14 zeigt eine Aufsicht der in Fig. 9 bis 13 dargestellten erfindungsgemäßen Baueinheit 3, 4. In der ersten Gehäuseschale 39 ist ein Stromverteiler 5, 7, 18 angeordnet, der über einen Stromanschluss 34 mit einem nicht dargestellten Energiebackbone 15 verbindbar ist. Über jeweils eine Absicherungsvorrichtung 25 je Lastanschluss 35, 36 sind letztere mit dem Stromverteiler 5, 7, 18 elektrisch gekoppelt. Die Lastanschlüsse 35, 36 sind als Kontaktzungen ausgeformt. Die erste Gehäuseschale 39 weist Aussparungen für entsprechende Last-Steckverbinder im Bereich der Lastanschlüsse 35, 36 auf. Zur Führung besagter Last-Steckverbinder sind in der Gehäuseschale 39 Stege vorgesehen, über die ein Einrasten, insbesondere mit einer Sekundärrastverbindung, in einer Variante realisiert ist.

Die Absicherungseinheiten 26 sind im dargestellten Ausführungsbeispiel mittels Durchsetzfügen mit dem Stromverteiler 5, 7, 18 verbunden.

Die Ausführungen zu den Lastanschlüssen 35, 36 gelten analog für den Masseanschluss 38 als auch den Stromanschluss 34.

In der Beschreibung zu dem in Fig. 9 bis Fig. 14 dargestellten Ausführungsbeispiel werden teilweise mehrere Bezugszeichen als Bezug zu den in Fig. 1 bis 6 dargestellten Ausführungsbeispielen für ein Element, eine Einrichtung verwendet, um mögliche Varianten darzustellen. Dabei wird jedoch auf einige Bezüge verzichtet, um das Ausführungsbeispiel noch lesbar zu gestalten. Für den Fachmann ist bewusst, dass die dargestellte Baueinheit 3, 4 mit allen Stromverteilern 5, 6, 7, 8, 18, 19 umsetzbar und einsetzbar ist beziehungsweise kombinierbar ist.

Abweichend von den dargestellten Ausführungsbeispielen kann die erfindungsgemäße elektrische Versorgungseinrichtung 2 in vielerlei Hinsicht abgewandelt werden.

Beispielsweise müssen nicht zwingend zwei Baueinheiten 3 und 4 vorgesehen sein. Vielmehr kann entweder nur die erste Baueinheit 3 oder nur die zweite Baueinheit 4 im Fahrzeug 1 angeordnet sein. Zudem kann jede Ausführungsvariante nach den Figuren 1 bis 3 auch die Absicherungsvorrichtung 25 umfassen, wobei die Absicherungsvorrichtung 25 nicht zwingend sämtliche Einheiten 26 bis 28 aufweisen muss.

### Bezugszeichenliste

- 1: Fahrzeug
- 2: elektrische Versorgungseinrichtung
- 3: erste Baueinheit
- 4: zweite Baueinheit
- 5: erster elektrischer Stromverteiler (12V)
- 6: erster elektrischer Stromverteiler (12V)
- 7: zweiter elektrischer Stromverteiler (HV)
- 8: zweiter elektrischer Stromverteiler (HV)
- 9: Gleichspannungswandler
- 10: Gleichspannungswandler
- 11: Vielzahl von elektrischen Verbrauchern (12V)
- 12: Vielzahl von elektrischen Verbrauchern (12V)
- 13: erste elektrische Energiequelle/Energiespeicher (HV/48V)
- 14: zweite elektrische Energiequelle/Energiespeicher (12V)
- 15: Energiebackbone (zum Beispiel Multischiene)
- 16: elektrische Backupleitung (12V)
- 17: Schaltelement
- 18: dritter elektrischer Stromverteiler (48V)
- 19: dritter elektrischer Stromverteiler (48V)
- 20: Vielzahl von elektrischen Verbrauchern (48V)
- 21: Vielzahl von elektrischen Verbrauchern (48V)
- 22: dritte elektrische Energiequelle/Energiespeicher (48V)
- 23: (weitere) elektrische Backupleitung (48V)
- 24: weiteres Schaltelement
- 25: Absicherungsvorrichtung
- 26: Absicherungseinheit
- 27: weitere Absicherungseinheit
- 28: Auslöseeinheit
- 29: Steuervorrichtung
- 30: Energiepufferspeicher
- 31: Powerzelle
- 32: Schalter, Unterbrechung durch Fehler
- 33: Gehäuse
- 34: Stromanschluss
- 35: Lastanschluss
- 36: Lastanschluss
- 37: Verbindung
- 38: Masseaschluss
- 39: erste Gehäuseschale
- 40: zweite Gehäuseschale
- 41: Gehäusedeckel

## Patentansprüche

1. Elektrische Versorgungseinrichtung (2) für ein Bordnetz eines Fahrzeugs (1),
- mit wenigstens einem elektrischen Stromverteiler (5, 6, 7, 8, 18, 19), der dazu eingerichtet ist, eine Vielzahl von elektrischen Verbrauchern (11, 12, 20, 21) mit elektrischer Energie zu versorgen, und
- mit wenigstens einem Gleichspannungswandler (9, 10), der dazu eingerichtet ist, den wenigstens einen elektrischen Stromverteiler (5, 6, 7, 8, 18, 19) zu speisen,
- wobei jeweils einer der wenigstens einen elektrischen Stromverteiler (5, 6, 7, 8, 18, 19) und jeweils einer der wenigstens einen Gleichspannungswandler (9, 10) zu einer einzigen Baueinheit (3, 4) räumlich zusammengefasst sind,
**dadurch gekennzeichnet, dass**
- wobei die elektrische Versorgungseinrichtung (2) in der zumindest einen Baueinheit (3, 4) einen Energiepufferspeicher (30) umfasst, wobei der Energiepufferspeicher (30) als ein chemischer Speicher für die Speicherung von elektrische Energie eine Anzahl von in Reihe geschalteter Powerzellen umfasst und ausgebildet ist, Leistungsspitzen abzudecken,
- wobei zwei oder mehr Baueinheiten (3, 4), in denen jeweils wenigstens ein elektrischer Stromverteiler (5, 6, 7, 8, 18, 19) und wenigstens ein Gleichspannungswandler (9, 10) räumlich zusammengefasst sind und diese zwei oder mehr Baueinheiten (3, 4) ausgebildet sind, innerhalb des Fahrzeugs (1) verteilt anordenbar zu sein, und
- wobei die zwei oder mehr Baueinheiten (3, 4) über ein Energiebackbone (15) insbesondere über eine Multischiene, elektrisch leitfähig miteinander verbunden sind.

2. Versorgungseinrichtung (2) nach Anspruch 1, **dadurch gekennzeichnet, dass** der elektrische Stromverteiler (5, 6, 7, 8, 18, 19) und der Gleichspannungswandler (9, 10) in einem gemeinsamen Gehäuse zusammengefasst sind.

3. Versorgungseinrichtung (2) nach Anspruch 1 oder 2, **dadurch gekennzeichnet, dass** die Baueinheit (3, 4) eine Mehrzahl von elektrischen Stromverteilern (5, 6, 7, 8, 18, 19) aufweist, die zumindest teilweise mit zueinander unterschiedlichen, elektrischen Soll-Spannungswerten gespeist sind.

4. Versorgungseinrichtung (2) nach einem der vorhergehenden Ansprüche, **dadurch gekennzeichnet, dass** der eingespeiste elektrische Soll-Spannungswert des wenigstens einen elektrischen Stromverteilers (5, 6, 7, 8, 18, 19) entweder etwa 12V, etwa 48V, oder im Hochvoltbereich mindestens etwa 60V oder mehr beträgt.

5. Versorgungseinrichtung (2) nach einem der vorhergehenden Ansprüche, **dadurch gekennzeichnet, dass** die Baueinheit (3, 4) wenigstens einen ersten elektrischen Stromverteiler (5, 6) aufweist, der zur Speisung mit einem Soll-Spannungswert von etwa 12V eingerichtet.

6. Versorgungseinrichtung (2) nach einem der vorhergehenden Ansprüche, **dadurch gekennzeichnet, dass** die Baueinheit (3, 4) wenigstens einen zweiten elektrischen Stromverteiler (7, 8) aufweist, der zur Speisung im Hochvoltbereich mit einem Soll-Spannungswert von mindestens etwa 60V oder mehr eingerichtet ist.

7. Versorgungseinrichtung (2) nach einem der vorhergehenden Ansprüche, **dadurch gekennzeichnet, dass** die Baueinheit (3, 4) wenigstens einen dritten elektrischen Stromverteiler (18, 19) aufweist, der zur Speisung mit einem Soll-Spannungswert von etwa 48V eingerichtet ist.

8. Versorgungseinrichtung (2) nach einem der vorhergehenden Ansprüche, **dadurch gekennzeichnet, dass** die zumindest eine Baueinheit (3, 4) skalierbar ausgeführt ist, insbesondere modular aufgebaut ist.

9. Versorgungseinrichtung (2) nach einem der vorhergehenden Ansprüche, **dadurch gekennzeichnet, dass** der wenigstens eine Gleichspannungswandler (9, 10) dazu eingerichtet ist, einen eingehenden Soll-Spannungswert im Hochvoltbereich von mindestens etwa 60V oder mehr in einen ausgehenden Soll-Spannungswert von etwa 12V und/oder von etwa 48V umzuwandeln.

10. Versorgungseinrichtung (2) nach einem der vorhergehenden Ansprüche, **dadurch gekennzeichnet, dass** die Baueinheit (3, 4) wenigstens eine Absicherungsvorrichtung (25) gegen elektrische Fehlfunktionen aufweist.

11. Versorgungseinrichtung (2) nach einem der vorhergehenden Ansprüche, **dadurch gekennzeichnet, dass** die Baueinheit (3, 4) eine Steuervorrichtung (28) zur Schaltsteuerung und/oder zur Datenkommunikation innerhalb des Fahrzeugs aufweist.

12. Versorgungseinrichtung (2) nach einem der vorhergehenden Ansprüche, **dadurch gekennzeichnet, dass** der wenigstens eine Gleichspannungswandler (9, 10) je Baueinheit (3, 4) dazu eingerichtet ist,
mit einem eingehenden Soll-Spannungswert von etwa 48 V gespeist zu werden und den Soll-Spannungswert von etwa 12 V bereitzustellen und/oder
dass der wenigstens eine Gleichspannungswandler (9, 10) je Baueinheit (3, 4) dazu eingerichtet ist, mit einem eingehenden Soll-Spannungswert im Hochvoltbereich von mindestens etwa 60V oder mehr gespeist zu werden und den Soll-Spannungswert von etwa 12 V und/oder etwa 48 V bereitzustellen.

13. Versorgungseinrichtung (2) nach einem der vorhergehenden Ansprüche, **dadurch gekennzeichnet, dass** die zwei oder mehr Baueinheiten (3, 4) über wenigstens eine elektrische Backupleitung (16, 23) elektrisch leitfähig miteinander verbunden sind.

14. Versorgungseinrichtung (2) nach einem der vorhergehenden Ansprüche, **dadurch gekennzeichnet, dass** der Stromverteiler (5, 6, 7, 8, 18, 19) und der Energiepufferspeicher (30) gestapelt angeordnet sind.

15. Versorgungseinrichtung (2) nach einem der vorhergehenden Ansprüche, **dadurch gekennzeichnet, dass** der Energiepufferspeicher (30) mit einer Anzahl von in Reihe geschalteten Powerzellen (31), mittels Titanatzellen, Lithium-Eisenphosphat-Zellen oder Eisenphosphat-Zellen, aufgebaut ist, insbesondere wobei zumindest eine Powerzelle mehr in Reihe geschaltet ist, als für die Nennspannung der Baueinheit (3,4) notwendig ist.

16. Versorgungseinrichtung (2) nach einem der vorhergehenden Ansprüche, **dadurch gekennzeichnet, dass** der Energiepufferspeicher (30) als eigensicherer Energiespeicher nicht-trennbar mit dem elektrischen Stromverteiler (5, 6, 7, 8, 18, 19) der Baueinheit (3, 4) elektrisch verbunden ist.

17. Bordnetz eines Fahrzeugs, mit wenigstens einer elektrischen Versorgungseinrichtung (2) nach einem der vorhergehenden Ansprüche.

18. Bordnetz gemäß Anspruch 17, bei dem die elektrische Versorgungseinrichtung (2) mit einer Spannung von 48 V oder einer Spannung im Hochvolt-Bereich von über 60 V, insbesondere über 450 V, gespeist wird.

## Claims

1. Electrical supply device (2) for a vehicle electrical system of a vehicle (1),
- having at least one electrical power distributor (5, 6, 7, 8, 18, 19) configured to supply a multiplicity of electrical loads (11, 12, 20, 21) with electrical energy, and
- having at least one DC-DC voltage converter (9, 10) configured to supply power to the at least one electrical power distributor (5, 6, 7, 8, 18, 19),
- wherein one of the at least one electrical power distributors (5, 6, 7, 8, 18, 19) and one of the at least one DC-DC voltage converters (9, 10) are physically combined to form a single physical unit (3, 4),
**characterized in that**
- wherein the electrical supply device (2) comprises an energy buffer store (30) in the at least one physical unit (3, 4), the energy buffer store (30) comprising a number of series-connected power cells as a chemical store for storing electrical energy and being designed to cover power peaks,
- wherein two or more physical units (3, 4) that each physically combine at least one electrical power distributor (5, 6, 7, 8, 18, 19) and at least one DC-DC voltage converter (9, 10) and these two or more physical units (3, 4) are designed to be able to be arranged in a distributed manner inside the vehicle (1), and
- wherein the two or more physical units (3, 4) are electrically conductively connected to one another by way of an energy backbone (15), in particular by way of a multi-rail.

2. Supply device (2) according to Claim 1, **characterized in that** the electrical power distributor (5, 6, 7, 8, 18, 19) and the DC-DC voltage converter (9, 10) are combined in a shared housing.

3. Supply device (2) according to Claim 1 or 2, **characterized in that** the physical unit (3, 4) has a plurality of electrical power distributors (5, 6, 7, 8, 18, 19), at least some of which are supplied with power using different electrical setpoint voltage values.

4. Supply device (2) according to one of the preceding claims, **characterized in that** the supplied electrical setpoint voltage value of the at least one electrical power distributor (5, 6, 7, 8, 18, 19) is either approximately 12 V, approximately 48 V, or in the high-voltage range at least approximately 60 V or more.

5. Supply device (2) according to one of the preceding claims, **characterized in that** the physical unit (3, 4) has at least one first electrical power distributor (5, 6) configured to supply power using a setpoint voltage value of approximately 12 V.

6. Supply device (2) according to one of the preceding claims, **characterized in that** the physical unit (3, 4) has at least one second electrical power distributor (7, 8) configured to supply power in the high-voltage range using a setpoint voltage value of at least approximately 60 V or more.

7. Supply device (2) according to one of the preceding claims, **characterized in that** the physical unit (3, 4) has at least one third electrical power distributor (18, 19) configured to supply power using a setpoint voltage value of approximately 48 V.

8. Supply device (2) according to one of the preceding claims, **characterized in that** the at least one physical unit (3, 4) is scalable, in particular is of modular design.

9. Supply device (2) according to one of the preceding claims, **characterized in that** the at least one DC-DC voltage converter (9, 10) is configured to convert an incoming setpoint voltage value in the high-voltage range of at least approximately 60 V or more into an outgoing setpoint voltage value of approximately 12 V and/or of approximately 48 V.

10. Supply device (2) according to one of the preceding claims, **characterized in that** the physical unit (3, 4) has at least one protection apparatus (25) for protecting against electrical malfunctions.

11. Supply device (2) according to one of the preceding claims, **characterized in that** the physical unit (3, 4) has a control apparatus (28) for switching control and/or for data communication inside the vehicle.

12. Supply device (2) according to one of the preceding claims, **characterized in that** the at least one DC-DC voltage converter (9, 10) per physical unit (3, 4) is configured
to be supplied with power using an incoming setpoint voltage value of approximately 48 V and to provide the setpoint voltage value of approximately 12 V and/or
**in that** the at least one DC-DC voltage converter (9, 10) per physical unit (3, 4) is configured to be supplied with power using an incoming setpoint voltage value in the high-voltage range of at least approximately 60 V or more and to provide the setpoint voltage value of approximately 12 V and/or approximately 48 V.

13. Supply device (2) according to one of the preceding claims, **characterized in that** the two or more physical units (3, 4) are electrically conductively connected to one another by way of at least one electrical backup line (16, 23).

14. Supply device (2) according to one of the preceding claims, **characterized in that** the power distributor (5, 6, 7, 8, 18, 19) and the energy buffer store (30) are in a stacked arrangement.

15. Supply device (2) according to one of the preceding claims, **characterized in that** the energy buffer store (30) is designed to have a number of series-connected power cells (31), by means of titanate cells, lithium iron phosphate cells or iron phosphate cells, in particular wherein at least one power cell more is connected in series than is necessary for the rated voltage of the physical unit (3, 4).

16. Supply device (2) according to one of the preceding claims, **characterized in that** the energy buffer store (30) is electrically connected to the electrical power distributor (5, 6, 7, 8, 18, 19) of the physical unit (3, 4) in non-disconnectable fashion as an intrinsically safe energy store.

17. Vehicle electrical system of a vehicle, having at least one electrical supply device (2) according to one of the preceding claims.

18. Vehicle electrical system according to Claim 17, in which the electrical supply device (2) is supplied with power at a voltage of 48 V or a voltage in the high-voltage range of above 60 V, in particular above 450 V.

## Revendications

1. Installation d'alimentation électrique (2) d'un réseau de bord d'un véhicule (1), ladite installation comprenant
- au moins un distributeur de courant électrique (5, 6, 7, 8, 18, 19) qui est conçu pour alimenter un grand nombre de consommateurs électriques (11, 12, 20, 21) en énergie électrique, et
- au moins un convertisseur de tension continue (9, 10) qui est conçu pour alimenter l'au moins un distributeur de courant électrique (5, 6, 7, 8, 18, 19),
- un des au moins un distributeur de courant électrique (5, 6, 7, 8, 18, 19) et un des au moins un convertisseur de tension continue (9, 10) étant à chaque fois réunis spatialement pour former une seule unité structurelle (3, 4),
**caractérisée en ce que**
- l'installation d'alimentation électrique (2) comprenant un accumulateur d'énergie tampon (30) dans l'au moins une unité structurelle (3, 4), l'accumulateur d'énergie tampon (30) comprenant un certain nombre de cellules de puissance montées en série en tant qu'accumulateur chimique destiné à stocker de l'énergie électrique et étant conçu pour éliminer les pics de puissance,
- deux unités structurelles (3, 4) ou plus, dans chacune desquelles au moins un distributeur de courant électrique (5, 6, 7, 8, 18, 19) et au moins un convertisseur de courant continue (9, 10) sont réunis spatialement et ces deux unités structurelles (3, 4) ou plus sont conçues pour pouvoir être disposée de manière répartie dans le véhicule (1), et
- les deux unités structurelles (3, 4) ou plus étant reliées électriquement entre elles par le biais d'une dorsale d'énergie (15), notamment par le biais d'une barre multiple.

2. Installation d'alimentation (2) selon la revendication 1, **caractérisée en ce que** le distributeur de courant électrique (5, 6, 7, 8, 18, 19) et le convertisseur de tension continue (9, 10) sont réunis dans un boîtier commun.

3. Installation d'alimentation (2) selon la revendication 1 ou 2, **caractérisée en ce que** l'unité structurelle (3, 4) comporte une pluralité de distributeurs de courant électrique (5, 6, 7, 8, 18, 19) qui sont au moins partiellement alimentés avec des valeurs de tension électriques nominales différentes les unes des autres.

4. Installation d'alimentation (2) selon l'une des revendications précédentes, **caractérisée en ce que** la valeur de la tension électrique nominale fournie de l'au moins un distributeur de courant électrique (5, 6, 7, 8, 18, 19) est d'environ 12V, d'environ 48V, ou dans la gamme de hautes tensions d'au moins environ 60V ou plus.

5. Installation d'alimentation (2) selon l'une des revendications précédentes, **caractérisée en ce que** l'unité structurelle (3, 4) comporte au moins un premier distributeur de courant électrique (5, 6) qui est conçu pour l'alimentation avec une valeur de tension nominale d'environ 12V.

6. Installation d'alimentation (2) selon l'une des revendications précédentes, **caractérisée en ce que** l'unité structurelle (3, 4) comporte au moins un deuxième distributeur de courant électrique (7, 8) qui est conçu pour l'alimentation dans la gamme des hautes tensions avec une valeur de tension nominale d'au moins environ 60V ou plus.

7. Installation d'alimentation (2) selon l'une des revendications précédentes, **caractérisée en ce que** l'unité structurelle (3, 4) comporte au moins un troisième distributeur de courant électrique (18, 19) qui est conçu pour l'alimentation avec une valeur de tension nominale d'environ 48V.

8. Installation d'alimentation (2) selon l'une des revendications précédentes, **caractérisée en ce que** l'au moins une unité structurelle (3, 4) est conçue pour être évolutive, notamment présente une structure modulaire.

9. Installation d'alimentation (2) selon l'une des revendications précédentes, **caractérisée en ce que** l'au moins un convertisseur de tension continue (9, 10) est conçu pour convertir une valeur de tension nominale entrante dans la gamme des hautes tensions d'au moins environ 60V ou plus en une valeur de tension nominale sortante d'environ 12V et/ou d'environ 48V.

10. Installation d'alimentation (2) selon l'une des revendications précédentes, **caractérisée en ce que** l'unité structurelle (3, 4) comporte au moins un dispositif de sécurité (25) contre les dysfonctionnements électriques.

11. Installation d'alimentation (2) selon l'une des revendications précédentes, **caractérisée en ce que** l'unité structurelle (3, 4) comporte un dispositif de commande (28) destiné à la commande par commutation et/ou à la communication de données à l'intérieur du véhicule.

12. Installation d'alimentation (2) selon l'une des revendications précédentes, **caractérisée en ce que** l'au moins un convertisseur de tension continue (9, 10) par unité structurelle (3, 4) est conçu pour être alimenté avec une valeur de tension nominale entrante d'environ 48 V et fournir la valeur de tension nominale d'environ 12 V et/ou **en ce que** l'au moins un convertisseur de tension continue (9, 10) par unité structurelle (3, 4) est conçu pour être alimenté avec une valeur de tension nominale entrante dans la gamme des hautes tensions d'au moins environ 60V ou plus et pour fournir la valeur de tension nominale d'environ 12 V et/ou d'environ 48 V.

13. Installation d'alimentation (2) selon l'une des revendications précédentes, **caractérisée en ce que** les deux unités structurelles (3, 4) ou plus sont reliées électriquement entre elles par le biais d'au moins une ligne électrique de secours (16, 23).

14. Installation d'alimentation (2) selon l'une des revendications précédentes, **caractérisée en ce que** le distributeur de courant (5, 6, 7, 8, 18, 19) et le accumulateur d'énergie tampon (30) sont disposés de manière empilée.

15. Installation d'alimentation (2) selon l'une des revendications précédentes, **caractérisée en ce que** l'accumulateur d'énergie tampon (30) est construit avec un certain nombre de cellules de puissance (31) montées en série, à l'aide de cellules au titanate, de cellules au lithium-phosphate de fer ou de cellules au phosphate de fer, en particulier au moins une cellule de puissance étant montée en plus en série que cela n'est nécessaire pour la tension nominale de l'unité structurelle (3, 4).

16. Installation d'alimentation (2) selon l'une des revendications précédentes, **caractérisée en ce que** l'accumulateur d'énergie tampon (30), en tant que accumulateur d'énergie à sécurité propre, est relié électriquement de manière indissociable au distributeur de courant électrique (5, 6, 7, 8, 18, 19) de l'unité structurelle (3, 4).

17. Réseau de bord d'un véhicule, comprenant au moins une installation d'alimentation électrique (2) selon l'une des revendications précédentes.

18. Réseau de bord selon la revendication 17, dans lequel l'installation d'alimentation électrique (2) est alimentée par une tension de 48 V ou une tension dans la gamme des hautes tensions de plus de 60 V, notamment de plus de 450 V.
